# EUROPEAN PATENT APPLICATION

(11) **EP 4 137 998 A2**
(43) Date of publication of application: **22.02.2023**
(21) Application number: 22190512.8
(22) Date of filing: 16.08.2022
(51) Int. Cl.: G06N 3/06, G06N 3/063, G06N 3/049

(54) **METHOD AND APPARATUS WITH ARTIFICIAL NETWORK GENERATION AND/OR IMPLEMENTATION CORRESPONDING TO A NATURAL NEURAL NETWORK**

(30) Priority: 19.08.2021 US 202163234744 P; 28.12.2021 KR 20210189953
(71) Applicant: Samsung Electronics Co., Ltd., Gyeonggi-do, 16677 (KR); President And Fellows Of Harvard College, Cambridge, Massachusetts 02138 (US)
(72) Inventor: Kim, Seijoon, Suwon-si, Gyeonggi-do (KR); Xu, Renjing, Cambridge (US); Park, Hongkun, Cambridge (US); Ham, Donhee, Cambridge (US); Kim, Sang Joon, Suwon-si, Gyeonggi-do (KR)
(74) Representative: Grünecker Patent- und Rechtsanwälte PartG mbB

(57) **Abstract**

A method and apparatus with artificial network generation and/or implementation corresponding to a natural neural network are disclosed. The method includes performing an adjusting, based on a firing time difference between an action potential (AP) of a first biological neuron and a post-synaptic potential (PSP) of a second biological neuron, of a first conductance value of a first memory corresponding to the first and second biological neurons, adjusting the firing time difference based on the PSP of the second biological neuron, and performing another adjusting, by controlling another firing time difference between the AP of the first biological neuron and the PSP of the second biological neuron to be the adjusted firing time difference, of a second conductance value of the first memory corresponding to the first and second biological neurons.

## Description

### BACKGROUND

### 1. Field

The following embodiments relate to a method and apparatus with artificial network generation and/or implementation corresponding to a natural neural network.

### 2. Description of Related Art

Neuromorphic engineering relates attempts to mimic the network operations of a biological nervous system.

The respective approaches of neuromorphic electronic devices may be divided into natural efforts that attempt to precisely reproduce or mimic the structural operation and function of a natural neural network (NNN), and non-natural efforts that implement an artificial neural network (ANN) having an artificial structure based on a mathematical model trained by machine learning, for example, with individual computations that may not require significant power. The natural efforts have typically required the individual considerations of a limited number (e.g., ten) targeted biological neurons to identify a natural neural network (e.g., by using a voltage or patch clamp approach applied to a select biological neuron), or required extracellular macro measurements for the collective observing of the firings of multiple action potentials (APs) of biological neurons of the natural neural network by using extracellular electrodes that generate noisy extracellular measurements of in vitro (dissociated cell culture) or ex vivo (tissue slice) preparations. Typically, such extracellular macro measurements cannot accurately measure or discern other synaptic potentials, such as post-synaptic potentials (PSPs), due to the extracellular electrodes suffering from low sensitivity, poor registration, mixed signal and signal distortion and/or due to the non-proximate arrangement of the extracellular electrodes with respect to individual neurons, for example. Accordingly, it is very difficult to identify operation mechanisms among a large number of biological neurons, and further difficult to identify a structure and feature of the natural neural network.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one general aspect, a method with artificial neural network generation includes performing an adjusting, based on a firing time difference between an action potential (AP) of a first biological neuron and a post-synaptic potential (PSP) of a second biological neuron, of a first conductance value of a first memory corresponding to the first and second biological neurons, adjusting the firing time difference based on the PSP of the second biological neuron, and performing another adjusting, by controlling another firing time difference between the AP of the first biological neuron and the PSP of the second biological neuron to be the adjusted firing time difference, of a second conductance value of the first memory corresponding to the first and second biological neurons.

The method may further include resetting a conductance of the first memory after the adjusting of the first conductance value and before the other adjusting of the second conductance value.

The second conductance value may be the same as the first conductance value upon the resetting of the conductance of the first memory.

The performing of the adjusting of the first conductance value may include performing the adjusting of the first conductance value when the firing time difference is less than or equal to a threshold value.

The method may further include converting the PSP of the second biological neuron into a pulse signal, where the firing time difference between the AP of the first biological neuron and PSP of the second biological neuron may be a time difference between the AP of the first biological neuron and a firing time of the pulse signal.

The first memory may be a memory corresponding to a first cross point of a crossbar memory, and performing of the adjusting of the first conductance value and the performing of the other adjusting of the second conductance may respectively include connecting the AP of the first biological neuron to a first electrode of the crossbar memory and connecting the PSP of the second biological neuron to a second electrode of the crossbar memory, where the first electrode and the second electrode may overlap at the first cross point.

The overlapping of the first electrode and the second electrode at the first cross point may include the first electrode connecting to a first terminal of a resistive memory and the second electrode connecting to a second terminal of the resistive memory at the cross point.

The memory may be a memory corresponding to a cross point of a crossbar memory, where first electrodes of the crossbar memory may overlap second electrodes of the crossbar memory at respective cross points of the crossbar memory.

The performing of the adjusting of the first conductance value of the first memory may include providing signals from first biological neurons to respective first electrodes of the crossbar memory, and providing signals from second biological neurons to respective second electrodes of the crossbar memory, and connection relationships between pairs of the first biological neurons and the second biological neurons may be indicated by first memories of cross points of the crossbar memory with adjusted first conductance values.

Plural biological neurons of the first biological neurons may also be plural biological neurons of the second biological neurons.

The performing of the other adjusting of the second conductance value may include performing the other adjusting for only second conductance values of the first memories corresponding to the cross points of the crossbar memory with the adjusted first conductance values.

Signals of first biological neurons may be provided to the first electrodes and signals of second biological neurons may be provided to the second electrodes, and where the performing of the adjusting of the first conductance value may further include adjusting first conductance values of first memories, of different cross points of the crossbar memory that respectively correspond to different pairs of the first and second biological neurons, corresponding to first pairs of the first and second biological neurons that have firing time differences less than or equal to a threshold value, representing that the each of the first pairs have pre-/post- synaptic relationships.

The performing of the other adjusting of the second conductance value may include performing the other adjusting of only the first memories corresponding to the first pairs.

The performing of the other adjusting of the second conductance value may include selectively performing the other adjusting based on determinations of which of first memories, corresponding to different pairs of first and second biological neurons, were adjusted in the performing of the adjusting of the first conductance value selectively for each of the different pairs of the first and second biological neurons.

The adjusting of the firing time difference may further include adjusting a firing time corresponding to the PSP of the second biological neuron based on an amplitude of the PSP of the second biological neuron.

The method may further include obtaining the AP of the first biological neuron and the PSP of the second biological neuron in real-time.

The method may further include selectively adjusting another conductance value of the first memory based on a counted number of pairs, of PSPs of the second biological neuron and APs of the first biological neuron, having respective firing times within a first threshold, within a predetermined time window, where the adjusting of the conductance value may be performed a number of times equal to the counted number, resulting in the first conductance value.

In one general aspect, one or more examples include a non-transitory computer-readable storage medium storing instructions that, when executed by a processor, cause the processor to perform any one, any combination, or all operations and/or methods described herein.

In one general aspect, a method with artificial neural network generation includes determining a conductance value of a first memory corresponding to first and second biological neurons based on a counted number of pairs, of post-synaptic potential (PSPs) of the second biological neuron and action potentials (APs) of the first biological neuron, having respective firing times within a first threshold, within a predetermined time window.

The method may further include counting the number of pairs, of the PSPs of the second biological neuron and the APs of the first biological neuron, that have the respective firing times within the first threshold, where the determining of the conductance value of the first memory may further include determining the conductance value of a cross point memory, of a crossbar memory, corresponding to the first and second biological neurons in response to the first and second biological neurons being determined to have a pre-/post- synaptic relationship based on the counted number.

The determining of the conductance value may further include adjusting the conductance value whenever a firing time difference between an AP of the first biological neuron and a firing time of a PSP of the second biological neuron is less than or equal to the first threshold.

The method may further include converting a PSP of the second biological neuron into a pulse signal, where the determining of the conductance value of the first memory may further include determining the conductance value of a cross point memory of the first memory based on a timing difference between an arrival time of an AP of the first biological neuron and an arrival time of the pulse signal of the second biological neuron.

The method may further include obtaining the APs of the first biological neuron and the PSPs of the second biological neuron in real-time.

In one general aspect, a method with artificial neural network generation includes selectively adjusting a conductance value of a first memory corresponding to first and second biological neurons based on a counted number of pairs, of post-synaptic potential (PSPs) of the second biological neuron and action potentials (APs) of the first biological neuron, having respective firing times within a first threshold, within a predetermined time window.

The adjusting of the conductance value may be performed a determined number of times.

The selective adjusting may include selecting the adjusting of the conductance value in response to the counted number being greater than or equal to a threshold.

The determined number of times may be equal to the counted number.

The method may further include performing another adjusting, based on a firing time difference between an AP of the first biological neuron and a PSP of the second biological neuron, of a first conductance value of the first memory, where the first conductance value may be a resultant conductance value of the adjusting of the conductance value the determined number of times.

The first memory may be a memory corresponding to a cross point of a crossbar memory, where first electrodes of the crossbar memory may overlap second electrodes of the crossbar memory at respective cross points of the crossbar memory.

The selective adjusting may include providing signals from first biological neurons to respective first electrodes of the crossbar memory, and providing signals from second biological neurons to respective second electrodes of the crossbar memory, where connection relationships and strengths between pairs of the first biological neurons and the second biological neurons may be indicated by corresponding first memories of cross points of the crossbar memory that have adjusted conductance values resulting from the selective adjusting.

The method may further include counting the number of pairs, of the PSPs of the second biological neuron and the APs of the first biological neurons, that have the respective firing times within the first threshold, and determining that the first and second biological neurons have a pre-/post- synaptic relationship in response to the counted number being greater than or equal to the second threshold value.

In one general aspect, an electronic device includes a crossbar memory having first electrodes, including a first electrode, that overlap second electrodes, including a second electrode, of the crossbar memory at respective cross points of the crossbar memory, with the first electrode and the second electrode overlapping to respectively connect to a first memory at a first cross point of the crossbar memory, and a processor configured to control a provision of an action potential (AP) of a first biological neuron to the first electrode, and a provision of a post-synaptic potential (PSP) of a second biological neuron to the second electrode, to selectively adjust, based on a firing time difference between the AP of the first biological neuron and the PSP of the second biological neuron, a first conductance value of the first memory, adjust the firing time difference based on the PSP of a second biological neuron, and control another provision of the AP of the first biological neuron to the first electrode and the PSP of the second biological neuron to the second electrode, having the adjusted firing time difference between the AP of the first biological neuron and the PSP of the second biological neuron, to selectively adjust a second conductance value of the first memory.

The processor may be further configured to control a resetting of a conductance of the first memory after first conductance value is adjusted and before the second conductance value is adjusted.

The second conductance value may be the same as the first conductance value upon the resetting of the conductance of the first memory.

The first conductance value may be adjusted in response to the firing time difference being less than or equal to a threshold value.

The processor may be further configured to convert the PSP of the second biological neuron into a pulse signal, and perform the control of the provision of the PSP of the second biological neuron to the second electrode by providing the pulse to the second electrode, and perform the control of the other provision of the PSP of the second biological neuron to the second electrode by providing the pulse to the second electrode, where the firing time difference between the AP of the first biological neuron and the PSP of the second biological neuron may be a time difference between the AP of the first biological neuron and a firing time of the pulse signal, and where the adjusted firing time difference may be between the AP of the first biological neuron and the pulse signal corresponding to the adjusted firing time difference.

For the adjustment of the firing time difference, the processor may be configured to adjust a firing time corresponding to the PSP of the second biological neuron based on an amplitude of the PSP of the second biological neuron.

In one general aspect, an electronic device includes a crossbar memory having first electrodes, including a first electrode, that overlap second electrodes, including a second electrode, of the crossbar memory at respective cross points of the crossbar memory, with the first electrode and the second electrode overlapping to respectively connect to a first memory corresponding to a first cross point of the crossbar memory, and a processor configured to control a provision of action potentials (APs) of a first biological neuron to the first electrode, and a provision of post-synaptic potentials (PSPs) of a second biological neuron to the second electrode, to selectively adjust a conductance value of the first memory based on a counted number of pairs, of the PSPs of the second biological neuron and the APs of the first biological neuron, having respective firing times within a first threshold, within a predetermined time window.

The control of the provision of the APs of the first biological neuron to the first electrode and the provision of the PSPs of the second biological neuron, may include providing respective APs of the first biological neural and respective PSPs of the second biological neuron a number of times equal to the counted number of pairs to adjust the conductance value of the first memory based the counted number of pairs.

The processor may be further configured to count the number of pairs, of the PSPs of the second biological neuron and the APs of the first biological neuron, that have the respective firing times within the first threshold, and, in response to the counted number being greater than or equal to a threshold, may perform the provision of the APs of the fist biological neuron and the provision of the PSPs of the second biological neuron.

The processor may be further configured to convert a PSP of the second biological neuron into a pulse signal, and determine the conductance value of a cross point memory of the crossbar memory based on a timing difference between an arrival time of an AP of the first biological neuron and an arrival time of the pulse signal of the second biological neuron.

The processor may be further configured to obtain the APs of the first biological neuron and the PSPs of the second biological neuron in real-time.

In one general aspect, a method with artificial neural network generation includes obtaining action potentials (APs) of a first biological neuron of a natural neural network and post-synaptic potentials (PSPs) of a second biological neuron of the natural neural network, determining a first conductance value of a first cross point memory corresponding to the first and second biological neurons, as a first mode, determining a second conductance value of a second cross point memory corresponding to the first and second biological neurons, as a second mode, and determining a final conductance value of a final cross point memory based on at least one of the first conductance value and the second conductance value, wherein the determining of the first conductance value includes adjusting, based on a firing time difference between an AP of the first biological neuron and a PSP of the second biological neuron, a conductance value of the first cross point memory, adjusting the firing time difference based on the PSP of the second biological neuron, and controlling another firing time difference between the AP of the first biological neuron and the PSP of the second biological neuron to be the adjusted firing time difference, and based on the controlled other firing time difference, adjusting another conductance value of the first cross point memory, to be the first conductance value, and wherein the determining of the second conductance value includes counting a number of pairs, of the PSPs of the second biological neuron and the APs of the first biological neuron, that have respective firing times within a first threshold, and selectively adjusting a conductance value of the second cross point memory based on the counted number of pairs, to be the second conductance value.

The first cross point memory, the second cross point memory, and final cross point memory may be a same cross point memory.

In one general aspect, an electronic device includes a crossbar memory having first electrodes, including a first electrode, that overlap second electrodes, including a second electrode, of the crossbar memory at respective cross points of the crossbar memory, with the first electrode and the second electrode overlapping to respectively connect to a first memory corresponding to a first cross point of the crossbar memory, and a processor configured to obtain action potentials (APs) of a first biological neuron of a natural neural network and post-synaptic potentials (PSPs) of a second biological neuron of the natural neural network, determine a first conductance value of a first cross point memory corresponding to the first and second biological neurons, as a first mode, determine a second conductance value of a second cross point memory corresponding to the first and second biological neurons, as a second mode, and determine a final conductance value of a final cross point memory based on at least one of the first conductance value and the second conductance value.

The processor may be further configured to adjust, based on a firing time difference between an AP of the first biological neuron and a PSP of the second biological neuron, a conductance value of the first cross point memory, adjust the firing time difference based on the PSP of the second biological neuron, and control another firing time difference between the AP of the first biological neuron and the PSP of the second biological neuron to be the adjusted firing time difference, and based on the controlled other firing time difference, adjust another conductance value of the first cross point memory, to be the first conductance value.

The processor may be further configured to count a number of pairs, of the PSPs of the second biological neuron and the APs of the first biological neuron, that have respective firing times within a first threshold, and selectively adjusting a conductance value of the second cross point memory based on the counted number of pairs, to be the second conductance value.

Other features and aspects will be apparent from the following detailed description, the drawings, and the claims.

### BRIEF DESCRIPTION OF THE DRAWINGS

FIG. 1 illustrates an example of a natural neural network mapping system, according to one or more embodiments.
FIG. 2A illustrates an example of a spike timing dependent plasticity (STDP) feature, according to one or more embodiments.
FIG. 2B illustrates an example of an architecture of a crossbar array, according to one or more embodiments.
FIGS. 3. and 4 illustrate an example of a method of implementjrig functions of a neural network in an electronic neural network device, according to one or more embodiments.
FIGS. 5 and 6 illustrate an example of a method of implementing functions of a natural neural network in an electronic neural network device, according to one or more embodiments.
FIG. 7 illustrates an example of a method of combining modes, according to one or more embodiments.
FIG. 8 illustrates an example of a structure of an electronic neural network device, according to one or more embodiments.
FIG. 9 illustrates an example of an electronic device, according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when a component is described as being "connected to," "coupled to", or "joined to" another component, it may be directly "connected to," "coupled to," or "joined to" the other component, or there may be one or more other components intervening therebetween. In contrast, when a component is described as being "directly connected to," or "directly coupled to" another element, there can be no other elements intervening therebetween. Likewise, similar relationship expressions, for example, "between" and "immediately between," and "adjacent to" and "immediately adjacent to," are also to be construed in the same way. As used herein, the term "and/or" includes any one and any combination of any two or more of the associated listed items.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application, and are not to be interpreted in an idealized or overly formal sense unless expressly so defined herein. The use of the term "may" herein with respect to an example or embodiment (e.g., as to what an example or embodiment may include or implement) means that at least one example or embodiment exists where such a feature is included or implemented, while all examples are not limited thereto.

Examples herein may be, or may be implemented in, various types of products, such as, for example, a personal computer (PC), a laptop computer, a tablet computer, a smart phone, a television (TV), a smart home appliance, an intelligent vehicle, a kiosk, and a wearable device, noting that embodiments are not limited thereto.

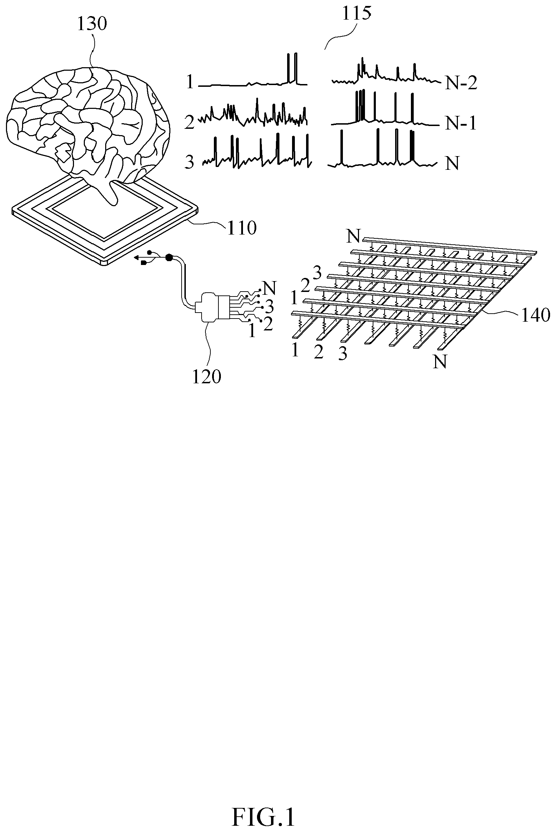

FIG. 1 illustrates an example of a natural neural network mapping system, according to one or more embodiments.

Referring to FIG. 1, a natural neural network mapping system may generate a neural network map that may attempt to perfectly mimic a structure and function(s) of a plurality of biological neurons (e.g., biological neurons of a large-scale natural neural network 130), as a non-limiting example, through recording (measurement) of neural signals generated in the biological neurons. For example, the large-scale neural network may be the natural neural network of, or included in, an animal or human brain, a corresponding nervous system, or other large-scale natural neural networks, as non-limiting examples. The natural neural network 130 may be used to configure a neuromorphic processor through a copying of the natural neural network 130 (e.g., including biological neuron connection structures and corresponding connection strengths or weightings) to the neuromorphic processor. In one or more embodiments, the configuring of the neuromorphic processor may be directly performed using the measurement results of the corresponding biological neurons (e.g., without computational analyses of measured potentials to computationally devise respective connections and/or weights between the biological neurons). In addition, such measurements of neural signals generated in/by the biological neurons may include different types or forms of membrane potentials (e.g., measured using at least intracellular electrodes, such as through an intracellular electrode interface). Hereinafter, the terms "neural network map", "functional map", and "synaptic connectivity map" may be understood to have the same meaning.

The natural neural network mapping system may include a recording unit 110 for measuring the different types or forms of membrane potentials of each of a plurality biological neurons of the example large-scale natural neural network 130 (e.g., in real time). In an example, the recording unit may be or include a complementary metal-oxide-semiconductor (CMOS) nanoelectrode array (CNEA), as a non-limiting example. The natural neural network mapping system may provide for communication between the recording unit 110 and a mapping device 120 for configuring an electronic neural network device 140 to have a same or like structure as the natural neural network 130, for example. In an example, the recording unit 110 may include wiring that connects to the mapping device 120 and/or the mapping device 120 may include wiring that connects to the reading unit 110, as illustrated in FIG. 1.

The electronic neural network device 140 may reproduce or mimic biological operations based on the biological neurons of the natural neural network 130. The biological neurons may refer to living nerve cells (i.e., not artificial neurons). For example, in examples where the electronic neural network device 140 (that has been copied the structure of the natural neural network 130) may be subsequently implemented based on input information or stimuli, the result or function of such implementations of the electronic neural network device 140 may be the same or substantially the same, for example, as if the biological neurons of the natural neural network 130 had reacted to the same stimuli. Herein, the references to biological neurons may be references to living nerve cells, for example, and not artificial neurons. Further, operations that are based on the biological neurons may include, for example, synaptic connection analyses, ion channel analyses, ion channel current measurements, and/or measurements of the effects of drugs on neural network connections and dynamics. However, examples are not limited thereto.

The recording unit 110 may include an electrode layer including a plurality of electrodes (e.g., intracellular electrodes) that may be in contact with the biological neurons through the electrodes to respectively record (or measure) neural signals generated by the biological neurons and/or to respectively inject (or provide) stimulation signals to the biological neurons.

For example, through use of the plurality of electrodes, the recording unit 110 may read electrical activities 115 of all the individual biological neurons of the natural neural network 130 that are respectively in contact with at least one of the electrodes (e.g., in real time).

The electrodes of the recording unit 110 may independently connect to the individual biological neurons to simultaneously perform respective recording and measuring for the membrane potentials of each of a plurality of the biological neurons of the natural neural network 130.

For example, in a biological neuron, a potential across the membrane of a biological neuron may typically have a resting membrane potential (e.g., approximately -70mV). The membrane potential may be caused/stimulated to increase or decrease, such as dependent on respective receptions of neurotransmitters by the biological neuron from another biological neuron that can cause or affect exchanges of ions across the neuron membrane, for example, which in turn results in the changes in the membrane potential. When the changing membrane potential meets a certain threshold (e.g., approximately -45mV), due to an example cascading change of the membrane potential from the resting membrane potential, the biological neuron may generate an action potential (AP), also known as "nerve impulses" or "spikes", where the emitting of the AP toward an axon terminal of the biological neuron may also be referred to as the biological neuron "firing." In response to the AP, the biological neuron may release the aforementioned neurotransmitters. Here, the biological neuron that releases the neurotransmitters may be referred to as a pre-synaptic neuron, and a subsequent biological neuron that receives the neural transmitters may be referred to as a post-synaptic neuron. The reception of the neurotransmitters by the post-synaptic neuron may also be reflected in a change in the membrane potential of the post-synaptic neuron, which may be referred to as a post-synaptic potential (PSP) of the post-synaptic neuron. APs and PSPs are thus different forms or types of membrane potentials. Accordingly, dependent on neurotransmitters received by the post-synaptic neuron from the pre-synaptic neuron, for example, as well as those received from other pre-synaptic neurons by the post-synaptic neuron, for example, the membrane potential of the post-synaptic neuron may repeatedly meet the aforementioned threshold and generate respective APs in the post-synaptic neuron. A temporal sequence of such APs generated by a biological neuron may also be called its "spike train." For example, the timing and frequency of such impulses or spikes of the pre-synaptic neuron's AP may represent the intensity of generated AP of the pre-synaptic neuron, and the timing and frequency of such impulses or spikes of the post-synaptic neuron's AP may represent the intensity of generated AP of the post-synaptic neuron. Accordingly, as a non-limiting example, a connection weighting or strength between the pre-synaptic neuron and the post-synaptic neuron may be demonstrated by a determined relationship between a pre-synaptic neuron's AP and the post-synaptic neuron's PSP. Here, while the above explanation is with respect to a general biological neuron pre-/post-synaptic relationship with respect to such respective different forms or types of the membrane potentials (e.g., the AP and PSP neuron signals), the above discussion is only an example, as the disclosure herein is also applicable to other biological neuron types having different operations with respect to the connection between pre-synaptic neuron(s) and post-synaptic neuron(s) for such information sharing between the pre-synaptic neuron and the post-synaptic neuron measurable by intercellular electrodes, for example.

The large volume of measured data may be directly obtained, transmitted, provided, or received (e.g., in real time) to/by the mapping device 120 to directly map/copy the synaptic connections and the synaptic weights of the natural neural network 130 to the electronic neural network device 140 dependent on the natural electrical activities between adjacent biological neurons (i.e., pre-/post-synaptic relationship biological neurons) of the natural neural network 130, where such pre-/post-synaptic relationships may be mapped/copied to the electronic neural network device 140 so as to provide corresponding, like, or same synaptic connections and synaptic weights as the natural neural network 130. For example, when action potential (AP) and post-synaptic potential (PSP) signals are directly applied to an example crossbar of the electronic neural network device 140 in rows and columns, the conductance of a crossbar array may be changed (in real time) due to a time difference between the applied signals, for example, memory-spike timing dependent plasticity (STDP).

The natural neural network mapping system may learn a large volume of measured data collected from the natural neural network 130 (or artificially generated from an artificial neural network) and copy or map a connection structure of the natural neural network 130 (or the artificial neural network) or attempt to mimic behaviors of the natural neural network 130. In an example, the system may generate the learned electronic neural network device 140 that may mimic a response of a target neural network to a predetermined stimulus (e.g., by using only electrical activities 115 of the biological neurons measured from the natural neural network 130) without using information related to the non-measured biological neurons of the target neural network (i.e., biological neurons other than the biological neurons measured in the target neural network). Similarly, in an example, with respect to the non-measured biological neurons of the target neural network, connectivities between biological neurons of the target neural network and a (e.g., each) non-measured biological neuron may not be copied or mapped into the electronic neural network device 140.

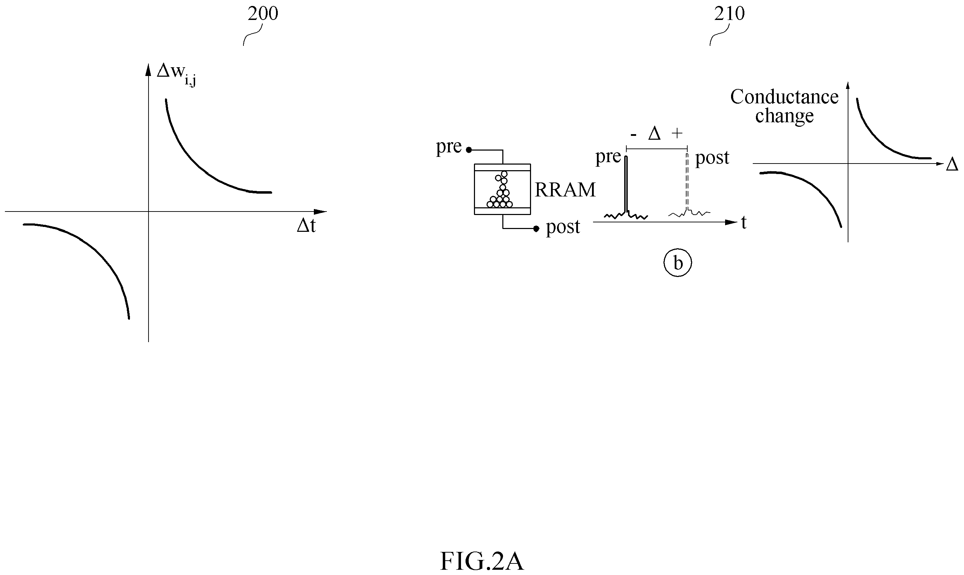

FIG. 2A illustrates an example of a spike-timing-dependent plasticity (STDP) feature, according to one or more embodiments.

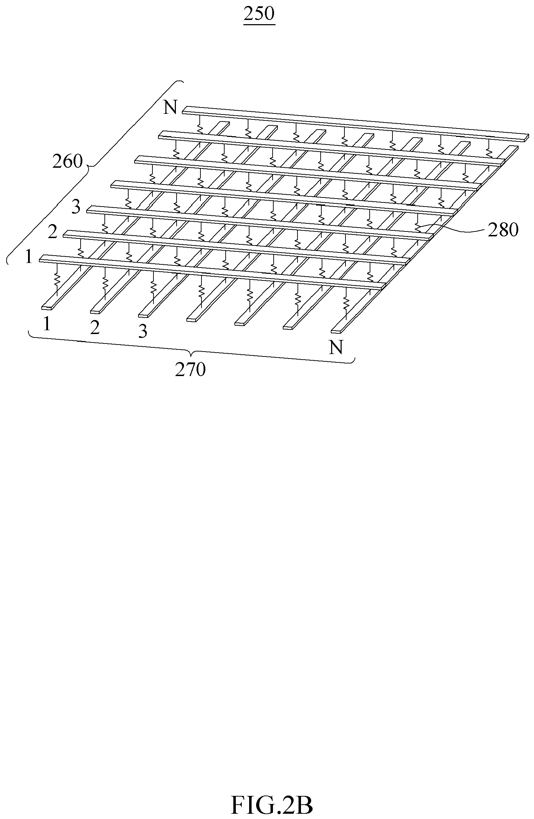

Example 200 of FIG. 2 demonstrates an example synaptic weight curve, with respect to a connection between a post-synaptic neuron and a pre-synaptic neuron, based on a time difference between a measured spike (e.g., spike or impulse in membrane potential) of at/in the pre-synaptic neuron and the corresponding measured spike at/in the post-synaptic neuron. For example, with respect to the pre-synaptic neuron and the post-synaptic neuron, the AP spike signal of the pre-synaptic neuron may be transmitted to an axon terminal of the pre-synaptic neuron and resulting in the PSP signal of the post-synaptic neuron. In this example 200, the synaptic weight of this connection between the pre-synaptic neuron and the post-synaptic neuron may be reflected in a time difference between the AP spike of the pre-synaptic neuron and the PSP of the post-synaptic neuron. This correlation between timing and synaptic weight may be referred to as spike-timing-dependent plasticity (STDP).

Referring to Example 210 in FIG. 2, a memory layer may provide such a STDP feature. More specifically, a change in conductance of a memory element (i.e., hardware memory) of the memory layer may increase as a time correlation between two signals (e.g., signal of the pre-synaptic neuron and signal of the post-synaptic neuron) increases. As another example, as the delay between the example two signals decreases the conductance of a corresponding memory element of the memory layer may increase (e.g., resistance of the corresponding memory element of the memory layer my decrease). For example, the memory layer may be implemented as resistive random access memory (RRAM), phase-change RAM (PRAM), and flash memory, as non-limiting examples. In an example, the memory layer may include a non-limiting crossbar memory arrangement, where each cross point may include or correspond to a memory element (e.g., the illustrated RRAM of FIG. 2A).

FIG. 2B illustrates an example of an architecture of a crossbar array, according to one or more embodiments.

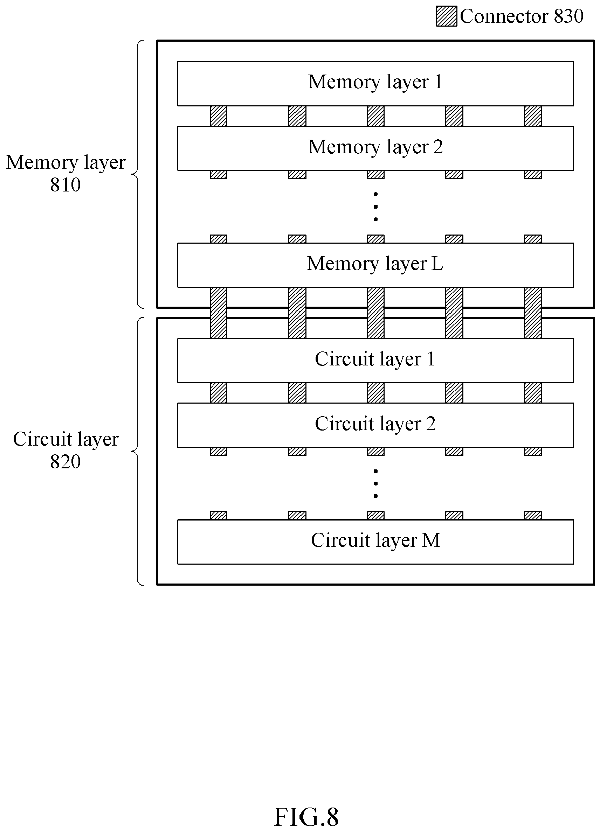

As demonstrated in FIG. 2B, a memory layer may be implemented in an architecture of a crossbar array 250. As a non-limiting example, one or more or all of the L memory layers of FIG. 8 may include such a crossbar array 250. The crossbar array 250 may include first electrodes 260 provided in a plurality of rows on a substrate, second electrodes 270 provided in a plurality of rows to cross the first electrodes 260, and memory elements 280 provided between the first electrodes 260 and the second electrodes 270, the memory elements 280 may each have a resistance that changes depending on a voltage applied between the corresponding first electrode 260 and the corresponding second electrode 270.

The mapping device 120, for example, may map the plurality of biological neurons making up a natural neural network to the first electrodes 260 and the second electrodes 270 and respectively map the respective synaptic weights between each of the biological neurons to the memory elements 280. As a non-limiting example, the mapping device 120 may map N biological neurons making up the natural neural network to the first electrodes 260 and the second electrodes 270 provided in their respective N rows (e.g., where both N rows have equal number of rows respectively corresponding to an equal N number of biological neurons), as a non-limiting example. A sequential 1 through N rows of the first electrodes 260 may respectively provide respective signals from 1 through N biological neurons, alike a sequential 1 through N rows of the second electrodes 270 that may also respectively provide respective signals from the 1 through N biological neurons, though embodiments are not limited to the same. For example, there may be any order of provision of the neural signals among the 1 through N biological neurons to the 1 through N first electrodes 260, which may be alike or different from any order of provision of other neural signals among the 1 through N biological neurons to the 1 through N second electrodes 270.

The mapping device 120 may respectively program or adjust the synaptic weights of the memory elements 280 using time differences between respective signals applied to the first electrodes 260 and applied to the second electrodes 270. For example, based on a time difference between when a first signal (e.g., representing an AP) applied to a particular first electrode 260 corresponding to an i-th biological neuron is generated and when a second signal (e.g., representing a PSP) applied to a particular second electrode 270 corresponding to a j-th biological neuron is generated, the mapping device 120 may perform STDP programming (e.g., synaptic weight adjustment) by changing the conductance of the memory element 280 located at a cross point of the crossbar array 250 corresponding to the spatial intersection of the particular first electrode 260 and the particular second electrode 270. However, the architecture of the memory layer is not necessarily limited to the crossbar array 250.

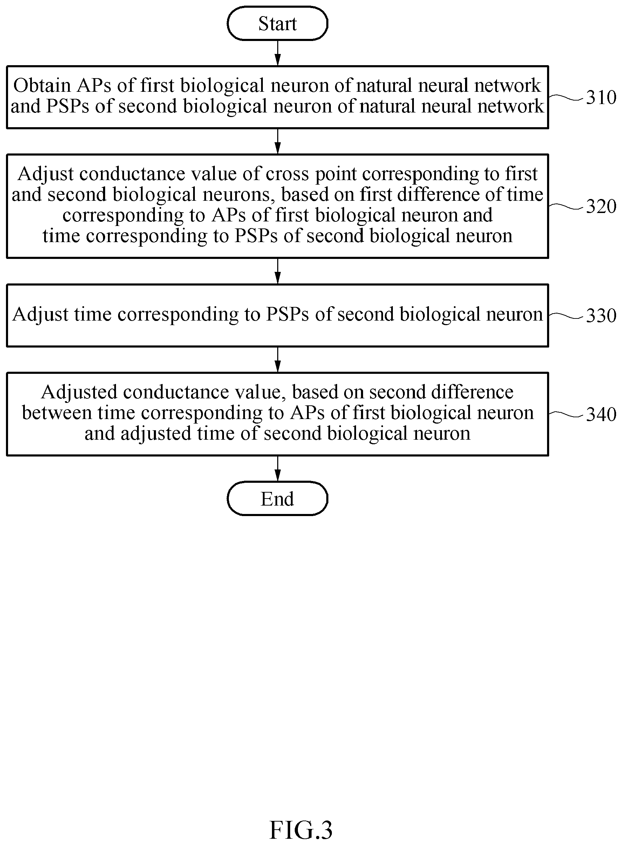

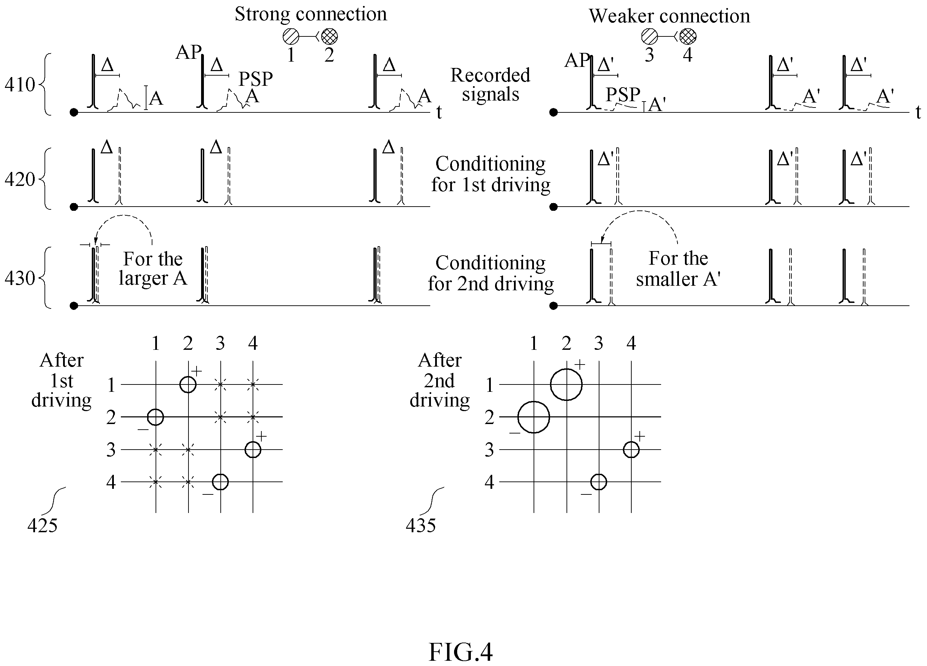

FIGS. 3 and 4 illustrate an example of a method of implementing functions of a natural neural network in an electronic neural network device, according to one or more embodiments.

Referring to FIG. 3, operations 310 through 340 may be performed by a mapping device 120 with respect to a memory (e.g., respectively, the mapping device 120 and memory layer(s) of the electronic neural network device 140 of FIGS. 1-2), where the mapping device 120 may be a processor of an electronic device or representative of the electronic device that includes the memory. The operations of FIG. 3 may be implemented by hardware components (e.g., a circuitry or processor), may be implemented by a processor configured to implement the mapping operations of FIG. 3 based on an execution of instructions by the processor, or may be implemented by a combination of the same. Operations may be performed in the sequence and manner as illustrated in FIG. 3. However, the order of some operations may change, or some of the operations may be omitted, without departing from the scope of the illustrative examples described. Furthermore, the operations shown in FIG. 3 may be performed in parallel or simultaneously.

The mapping device 120 may map synaptic weights of a natural neural network by directly transmitting or providing measured/read membrane potentials of the natural neural network (e.g., measured in real time) to the electronic neural network device 140. The electronic neural network device 140 may learn pre-/post-synaptic relationships, as well as the strengths or weightings of each of the pre-/post-synaptic relationship biological neuron connections, based on the membrane potentials collected/measured from the natural neural network. Based on this learning, the electronic neural network device 140 may duplicate the connection structure of the natural neural network or mimic behaviors thereof. In an example, the electronic neural network device 140 mapped through the mapping device 120 may mimic a response of the natural neural network to predetermined stimulus/stimuli based on a learning from time-series membrane potential information of some of the biological neurons of the natural neural network measured/read from the natural neural network (e.g., without using information related to the number of not-measured neurons other than the biological neurons measured in the natural neural network and their connectivity between biological neurons). In addition, as 'some' biological neurons of the natural neural network whose membrane potentials are measured may not have such a pre-/post-synaptic connection relationship with another biological neuron (e.g., a corresponding measured AP from one biological neuron may not correlate with a measured PSP of another biological neuron and thus these AP and PSP measurements would not affect the electronic neural network device 140 to learn of such a non-connection between such 'some' biological neurons) the corresponding portions of the electronic neural network device 140 may not be learned or include synaptic weight information, and may merely maintain an original conductivity.

In operation 310, the electronic device may obtain APs of a first biological neuron of the example natural neural network and PSPs of a second biological neuron of the natural neural network. The electronic device may extract the APs from a measured membrane potential of a corresponding first biological neuron and extract PSPs from a measured membrane potential of a corresponding second biological neuron. For example, the mapping device 120 may be connected to a recording unit 110 (e.g., a nanoelectrode array with respective intracellular electrodes/probes) that measures the APs and PSPs, and thus, may directly receive the extracted APs and PSPs of the first and second biological neurons.

In operation 320, the electronic device may adjust a corresponding conductance value of the electronic neural network device 140 (e.g., of a memory element at a cross point of a non-limiting example crossbar of one or more memory layers of the electronic neural network device 140) corresponding to the first and second biological neurons, based on a first difference between timings of the APs of the first biological neuron and timings of the PSPs of the second biological neuron, respectively.

More specifically, in an example, upon their respective receipts by the electronic device (or a mapping device 120 of the electronic device), the electronic device may convert each of the PSPs of the second biological neuron into respective pulse signals, and may adjust the conductance value of the example cross point corresponding to the first and second biological neurons using the pulse signals and the AP signals. For example, an adjustment of the conductance value may be implemented based on a timing difference between the arrival time of an AP of the first biological neuron at the example cross point and the arrival time of a pulse signal of the second biological neuron (i.e., converted from a corresponding PSP) at the example cross point.

Through this process, the electronic device may generate the connection structure of the first and second biological neurons. The generation of the connection structure between the biological neurons may include generating information (e.g., in the electronic neural network device 140) of a pre-/post- relationship (pre-synaptic neurons and post-synaptic neurons) between the biological neurons.

The electronic device may discriminate between adjacent biological neurons (i.e., connected biological neurons) by analyzing relationships between the PSPs and the APs of the biological neurons. For example, in case the first difference is less than or equal to a threshold value for a particular cross point, the electronic device may determine that the first and second biological neurons are connected to each other and have a pre-/post- relationship. Alternatively, when first difference is infinite or otherwise greater than the threshold value for a particular cross point, the electronic device may determine that the corresponding first and second biological neurons are not connected to each other and do not have a pre-/post- relationship.

In operation 330, the electronic device may determine adjustments for the timings of the pulses corresponding to the PSPs of the second biological neuron. The electronic device, which has identified the connection structure between the first and second biological neurons, may determine the adjustments of the respective timings of the pulses corresponding to the PSPs of the second biological neuron, based on the corresponding amplitudes of the PSPs of the second biological neuron. For example, the electronic device may reflect an STDP feature based on such a determinations of the adjusted timings of the pulses corresponding to the PSPs of the second biological neuron such that a new second difference of arrival times between an AP of the first biological neuron and the adjusted timing PSP of the second biological neuron may be inversely proportional to the amplitude of the PSP of the second biological neuron.

In an example, in operation 340, the electronic neural network device 140 may be reset with respect to the adjusted conductances in operation 320 (e.g., to default or initialized values alike the conductances of the electronic neural network device 140 prior to operation 320). For example, a crossbar architecture of a memory layer of the electronic neural network device 140 may be reset. The electronic device may then adjust the reset conductance value of the example cross point corresponding to the first and second biological neurons using the pulse signals with the adjusted timings and the AP signals. For example, an adjustment of the conductance value may be implemented based on the example second difference between the arrival time of an AP of the first biological neuron at the example cross point and the arrival time of a pulse signal with the adjusted timing of the second biological neuron.

FIG. 4 illustrates an example using four neurons, where biological neuron 1 and biological neuron 2 (respectively referred as neuron 1 and neuron 2 in the below explanation of an example of FIG. 4) are connected by a first strength, biological neuron 3 and neuron 4 (respectively referred as neuron 3 and neuron 4 in the below explanation of such an example of FIG. 4) are connected by a second strength, and the first strength is greater than the second strength.

The neurons 1 and 3 may correspond to pre-synaptic neurons, and the neurons 2 and 4 may correspond to post-synaptic neurons. Furthermore, an electronic neural network device may include a first electrode formed in four rows, each row corresponding to a different neuron of the four biological neurons, and may include a second electrode formed in four columns, each column corresponding to a different neuron of the four biological neurons.

In operation 410, an AP of the neuron 1 may induce a strong PSP A of the neuron 2, and an AP of the neuron 3 may induce a weak PSP A' of the neuron 4. Thus, the PSP A of the neuron 2 may have a greater amplitude than the weak PSP A' of the neuron 4.

In operation 420, an electronic device may convert the PSPs of the neurons 2 and 4 into pulse signals. For example, the electronic device may convert the PSPs of the neurons 2 and 4 into pulse signals using (or respectively using) a pulse signal conversion analog circuit. Alternatively, the electronic device may convert the PSPs of the post-synaptic neurons (i.e., neurons 2 and 4) into pulse signals using a pulse signal conversation digital circuit. For example, the mapping device 120 of FIG. 1 may be representative of such circuits.

The mapping device may apply the APs of the pre-synaptic neurons (i.e., neurons 1 and 3) to corresponding rows of a non-limiting example crossbar array of one or more memory layers of an example electronic neural network device 140, and apply the pulse signals for the post synaptic neurons (i.e., neurons 2 and 4) to corresponding columns of the crossbar array.

Referring to Example 425 of FIG. 4, the mapping device 120 may apply the APs of the neuron 1 to row 1 of the crossbar array and the pulse signals for the neuron 2 to column 2 the crossbar array for a cross point of (1, 2) (in (i, j) of the example crossbar, i may represent an i-th row and j may represent a j-th column) of the crossbar array. Similarly, for example, the mapping device may apply the APs of the neuron 3 to row 3 of the crossbar array and the pulse signals for the neuron 4 to column 4 of the crossbar array for a cross point of (3, 4) of the crossbar array.

Since there is a timing correlation between the APs of the neuron 1 and the PSPs of the neuron 2, the conductance of the cross point of (1, 2) may increase. Similarly, since there is a timing correlation between the APs of the neuron 3 and the PSPs of the neuron 4, the conductance of the cross point of (3, 4) may increase. STDP aspects with respect to the timing differences between applied first membrane potentials for a first biological neuron and second membrane potentials for a second biological neuron are also sign dependent with respect to the timing differences between the first membrane potentials and the second membrane potentials, meaning that while a timing difference between a first membrane potential of the first biological neuron and a second membrane potential of the second biological neuron may result in a positive (+) time difference with respect to the first membrane potential of the first biological neuron, a timing difference between the second membrane potential of the second biological neuron and the first membrane potential of the first biological neuron may result in a negative (-) time difference with respect to the second membrane potential of the second biological neuron. Accordingly, as the conductance at cross point (1, 2) increases due to the timing difference between the APs of neuron 1 and pulses for the PSPs of neuron 2, and the conductance at cross point (3, 4) increases due to the timing difference between the APs of neuron 3 and pulses for the PSPs of neuron 4, the conductances at the cross points (2, 1) and (4, 3) may decrease symmetrically with the conductance increases at the cross points (1, 2) and (3, 4), respectively.

Additionally, due to an absence of an STDP response at the remaining cross points due to there being no time correlations (e.g., between the neuron 1 and the neuron 3, or between the neuron 2 and the neuron 4), the respective conductances at those remaining cross points may be unchanged.

Therefore, through operation 420, the electronic device may identify the respective connection structures of the pre-synaptic neurons (the neurons 1 and 3) and the post-synaptic neurons (the neurons 2 and 4).

Operation 430 may be an operation of programming or mapping synaptic weights of the natural neural network, and may be performed after resetting the memory after operation 420, for example.

In operation 430, the electronic device may adjust a time interval between the timings of the APs of the pre-synaptic neurons (the neurons 1 and 3) and the timings of the PSPs of the post-synaptic neurons (the neurons 2 and 4), based on an amplitude of the PSPs of the post-synaptic neurons (the neurons 2 and 4). For example, when converting PSPs to pulses, the converted pulses applied in operation 420 may have had a same or like timing as the corresponding PSPs. However, in operation 430, the timing of the APs, the timings of the pulses, or timings of the APs and timings of the pulses may be adjusted according to the respective amplitudes of the PSPs (e.g., according to a determined time interval adjustment).

For example, since the amplitude of the PSPs of the neuron 2 is greater than the amplitude of the PSPs of the neuron 4, the electronic device may adjust the respective time intervals between the timings of the APs of the neuron 1 and the timings of pulses corresponding to the PSPs of the neuron 2 to be narrower than the respective time intervals between the timings the APs of the neuron 3 and the timings of pulses corresponding to the PSPs of the neuron 4. An interval between the timings of the APs and the timings of the pulses corresponding to the PSPs may be with respect to when the APs and the pulses corresponding to the PSPs arrive at a corresponding cross point.

Referring to Example 435 of FIG. 4, since the time interval between the timings of the APs of the neuron 1 and the timings (e.g., adjusted timings) of pulses of the PSPs of the neuron 2 are adjusted to be narrower than the time interval between the timings of the APs of the neuron 3 and the timings (e.g., adjusted timings) of the pulses for the PSPs of the neuron 4, the conductance of (1, 2) may be adjusted to be greater than the conductance of (3, 4). Additionally, by reducing an original time interval between the arrival of an AP and a pulse of a PSP at a cross point, the conductance of the adjustment of the cross point may be greater than the adjustment of the cross point in operation 420 with respect to the original time interval

Through this process, the electronic device may reflect the STDP feature.

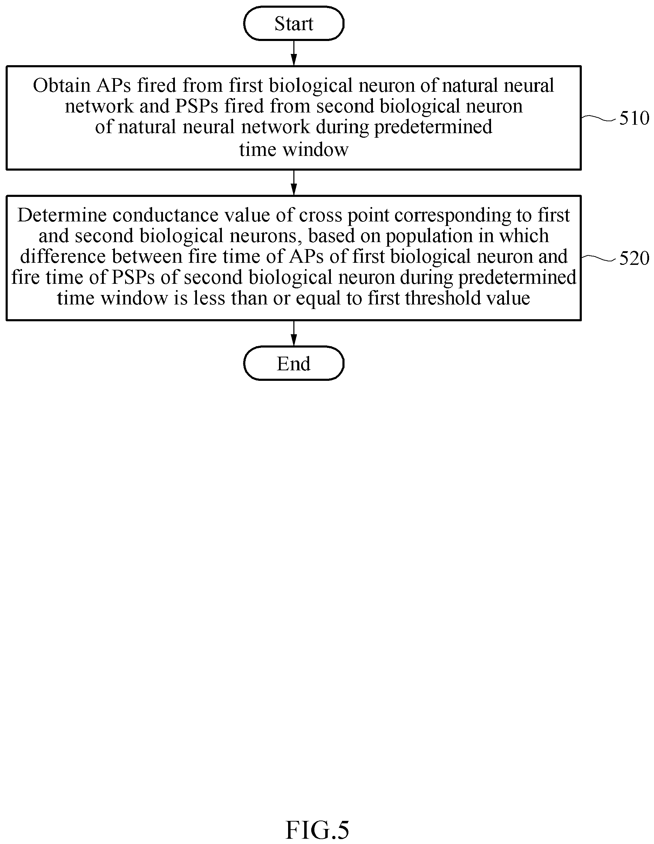

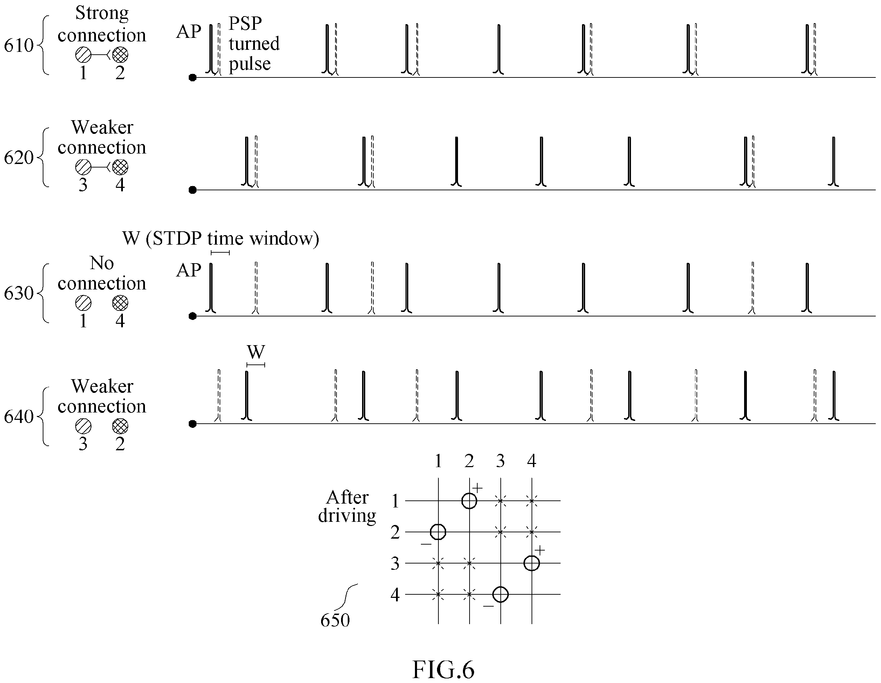

FIGS. 5 and 6 illustrate an example method of implementing functions of a natural neural network in an electronic neural network device, according to one or more embodiments.

Referring to FIG. 5, operations 510 and 520 may be performed by a mapping device 120 with respect to a memory (e.g., respectively, the mapping device 120 and memory layer(s) of the electronic neural network device 140 of FIGS. 1-2), where the mapping device 120 may be a processor of an electronic device or representative of the electronic device that includes the memory. The operations of FIGS. 5-6 may be implemented by hardware components (e.g., a circuitry or processor), may be implemented by a processor configured to implement the mapping operations of FIGS. 5-6 based on an execution of instructions by the processor, or may be implemented by a combination of the same. Operations of FIGS. 5-6 may be performed in the shown order and manner. However, the order of some operations may change, or some operations may be omitted, without departing from the scope of the shown example. The operations shown in FIGS. 5-6 may be performed in parallel or simultaneously.

The mapping device 120 may map synaptic weights of a natural neural network by directly transmitting or providing measured/read membrane potentials of the natural neural network (e.g., measured in real time) to the electronic neural network device 140. The electronic neural network device 140 may learn pre-/post-synaptic relationships, as well as the strengths or weightings of each of the pre-/post-synaptic relationship biological neuron connections, based on the membrane potentials collected/measured from the natural neural network. Based on this learning, the electronic neural network device 140 may duplicate the connection structure of the natural neural network or mimic behaviors thereof. In an example, the electronic neural network device 140 mapped through the mapping device 120 may mimic a response of the natural neural network to predetermined stimulus/stimuli based on a learning from time-series membrane potential information of some of the biological neurons of the natural neural network measured/read from the natural neural network (e.g., without using information related to the number of not-measured biological neurons other than the biological neurons measured in the natural neural network and their connectivity between biological neurons). In addition, as 'some' biological neurons of the natural neural network whose membrane potentials are measured may not have such a pre-/post-synaptic connection relationship with another biological neuron (e.g., a corresponding measured AP from one biological neuron may not correlate with a measured PSP of another biological neuron and thus these AP and PSP measurements would not affect the electronic neural network device 140 to learn of such a non-connection between such 'some' biological neurons) the corresponding portions of the electronic neural network device 140 may not be learned or include synaptic weight information, and may merely maintain an original conductivity.

In operation 510, the electronic device may obtain APs fired from a first biological neuron of an example natural neural network and PSPs fired from a second biological neuron of the natural neural network during a predetermined time window. The electronic device may extract the APs from a measured membrane potential of a corresponding first biological neuron and extract PSPs from a measured membrane potential of a corresponding second biological neuron. For example, the mapping device 120 may be connected to a recording unit 110 (e.g., a nanoelectrode array with respective intracellular electrodes/probes) that measures the APs and PSPs, and thus, may directly receive the extracted APs and PSPs of the first and second biological neurons. In an example, after APs and PSPs are obtained during the predetermined time window, APs and PSPs may then be obtained during the next predetermined time window (e.g., having a same length of time as the predetermined time window), and operation 520 may be performed with respect to that next predetermined time window.

In operation 520, the electronic device may determine a corresponding conductance value of the electronic neural network device 140 (e.g., of a memory element at a cross point of a non-limiting example crossbar of one or more memory layers of the electronic neural network device 140) corresponding to the first and second biological neurons, based on a determination, with respect to each pairs of first and second biological neurons during the predetermined time window, of a respective total number of APs and PSPs in which a difference between the fire time (or obtained timing) of an AP of the first biological neuron and the fire time (or obtained timing) of a PSP of the second biological neuron is less than or equal to a first threshold value. The first threshold value may also be referred to as an STDP time window (as illustrated in FIG. 6).

For each of the pairs of first and second biological neurons that have respective total numbers, of corresponding AP and PSP signals that are withing the first threshold from each other, greater than or equal to a second threshold value, the electronic device may determine that those pairs of first and second biological neurons respectively are connected to each other, and may proceed to determine the conductance values of the corresponding cross points. For example, for such an example first and second biological neurons, the electronic device may count the number of APs and PSPs of the first biological neuron that occur within the first threshold value (e.g., the difference between the fire time of an AP of the first biological neuron and the fire time of a PSP of the second biological neuron is less than or equal to the first threshold value). When the counted number is greater than or equal to the second threshold then the first and second biological neurons are considered connected and a conductance of a memory element at corresponding cross point of a crossbar is adjusted by applying the APs and the PSPs that occur within the STDP time window to the corresponding cross point. The PSPs may be pulses corresponding to the PSP, and timings of the PSPs may be timings of the pulses corresponding to the PSPs.

Accordingly, the electronic device may adjust the conductance value whenever the difference between the fire time of an AP of the first biological neuron and the fire time of a PSP of the second biological neuron, during the predetermined time window, is less than or equal to the first threshold value, and the first biological neuron and the second biological neuron are determined to be connected based on the counted number being greater than or equal to the second threshold.

FIG. 6 illustrates an example using four biological neurons, where a biological neuron 1 and a biological neuron 2 (respectively referred as neuron 1 and neuron 2 in the below explanation of an example of FIG. 6) are connected by a first strength, neuron 3 and neuron 4 (respectively referred as neuron 3 and neuron 4 in the below explanation of such an example of FIG. 6) are connected by a second strength, and the first strength is greater than the second strength.

The neurons 1 and 3 may correspond to pre-synaptic neurons, and the neurons 2 and 4 may correspond to post-synaptic neurons. Furthermore, an electronic neural network device may include a first electrode formed in four rows, each row corresponding to a different neuron of the four biological neurons, and may include a second electrode formed in four columns, each column corresponding to a different neuron of the four biological neurons.

The electronic device may obtain the APs fired from the neurons 1 and 3 and the PSPs fired from the neurons 2 and 4 during a predetermined time window. Furthermore, the electronic device may convert the obtained PSPs of the neurons 2 and 4 into pulse signals. For example, the electronic device may convert the PSPs of the post-synaptic neurons (i.e., PSPs of each of neurons 2 and 4) into pulse signals using (or respectively using) a pulse signal conversion analog circuit. Alternatively, the electronic device may convert the PSPs of the post-synaptic neurons into pulse signals using a pulse signal conversation digital circuit. For example, the mapping device 120 of FIG. 1 is representative of inclusion of such circuits.

Referring to Example 610 of FIG. 6, during the predetermined time window, the APs of the neuron 1 have fired 7 times, and the pulse signals (converted from the PSPs) of the neuron 2 have fired 6 times. In addition, all fire times of the six pulse signals fired from the neuron 2 are respectively within a first threshold value of fire times of corresponding APs of the neuron 1. Each pulse signal (converted from the PSPs) of a post-synaptic neuron within the first threshold value of a corresponding AP of a pre-synaptic neuron may also be defined as an effective firing. Thus, with respect to the relationship with the neuron 1 in Example 610, the neuron 2 may have 6 effective firings, which may also be referred to 6 effective firings between neuron 1 and neuron 2. In this example, neuron 1 and neuron 2 may be considered paired neurons under connectivity consideration.

Referring to Example 620 of FIG. 6, during the predetermined time window, the APs of the neuron 3 have fired 7 times, and the pulse signals (converted from the PSPs) of the neuron 4 have fired 3 times. In addition, all fire times of the three pulse signals fired from the neuron 4 are respectively within the first threshold value of fire times of corresponding APs of the neuron 3. Thus, in the relationship with the neuron 3 in Example 620, the neuron 4 may have 3 effective firings, which may also be referred to 3 effective firings between neuron 3 and neuron 4. In this example, neuron 3 and neuron 4 may be considered paired neurons under connectivity consideration.

Referring to Example 630 of FIG. 6, during the predetermined time window, the APs of the neuron 1 have fired 7 times, and the pulse signals (converted from the PSPs) of the neuron 4 have fired 3 times. However, all fire times of three pulse signals fired from the neuron 4 are outside of the first threshold value with respect to fire times of the corresponding APs of the neuron 1. Thus, in the relationship with the neuron 1 in Example 630, the neuron 4 may have 0 effective firings, which may also be referred to there being zero effective firings between neuron 1 and neuron 4. In this example, neuron 1 and neuron 4 may not be considered paired neurons under connectivity consideration.

Referring to Example 640 of FIG. 6, during the predetermined time window, the APs of the neuron 3 have fired 7 times, and the pulse signals (converted from the PSPs) of the neuron 2 have fired 3 times. However, all fire times of three pulse signals fired from the neuron 2 are outside of the first threshold value with respect to fire times of the corresponding APs of the neuron 3. Thus, in the relationship with the neuron 3 in Example 640, the neuron 2 may have 0 effective firings, which may also be referred to there being zero effective firings between neuron 3 and neuron 2. In this example, neuron 3 and neuron 2 may not be considered paired neurons under connectivity consideration.

Accordingly, when effective firings of a j-th biological neuron is greater than or equal to a second threshold value in the relationship with an i-th biological neuron, the electronic device may determine that the i-th biological neuron and the j-th biological neuron are connected. Conversely, when the number of effective firings of the j-th biological neuron is less than the second threshold value in the relationship with the i-th biological neuron, the electronic device may determine that the i-th biological neuron and the j-th biological neuron are not connected.

In the above example, based on an assumption that the second threshold value is 2, the electronic device may determine that the neurons 1 and 2 are connected and the neurons 3 and 4 are connected, and may determine that the neurons 1 and 4 are not connected and the neurons 3 and 2 are not connected.

The electronic device may adjust a conductance value of a corresponding cross point (e.g., of a non-limiting example crossbar of one or more memory layers of an example electronic neural network device 140) using the effective firings (e.g., every effective firing) for each connected biological neuron pair, while noting that one of the biological neuron pair may be a biological neuron of one or more other biological neuron pairs and the other one of the biological neuron pair may be a biological neuron of one or more other biological neuron pairs. For example, the electronic device may adjust a conductance value of a cross point corresponding to the neuron 1 and neuron 2 connected pair based on every effective firing of neuron 2, and the electronic device may adjust a conductance value of a cross point corresponding to the neuron 3 and neuron 4 connected pair based on every effective firing of neuron 4.

More particularly, as illustrated in Example 650 of FIG. 6, due to the 7 effective firings between the neurons 1 and 2, conductance of a cross point of (1, 2) may be increased 7 times, and due to 3 effective firings between the neurons 3 and 4, conductance of a cross point of (3, 4) may be increased 3 times. Thus, due to the additional increases in conductance, the conductance of the cross point of (1, 2) may have a greater value than the conductance of the cross point of (3, 4). In addition, similar to the above, since STDP is sensitive to a sign of a time delay or time difference between firings of a pre-synaptic neuron and a post-synaptic neuron, the conductance of (2, 1) and (4, 3) may decrease. For example, while neuron 1 and neuron 2 have already been determined to be connected, from the alternate perspective of the connection of neuron 2 (post-synaptic neuron) to neuron 1 (pre-synaptic neuron) the firing of the membrane potential of neuron 1 will occur still prior to the membrane potential of neuron 2, so the conductance adjustment by applying the respective membrane potentials at the cross point (2, 1) will be negative from the perspective of neuron 2.

Furthermore, since the neurons 1 and 4 and the neurons 3 and 2 had 0 effective firings, the conductance of the cross point of (1, 4) and the conductance of the cross point of (3, 2) may be unchanged. Similarly, the conductance of the cross point of (4, 1) and the conductance of the cross point of (2, 3) may be unchanged.

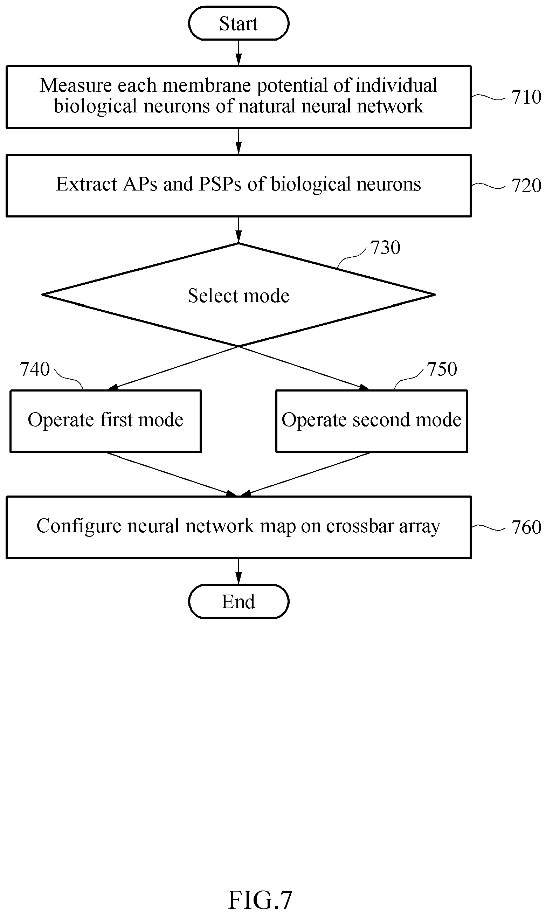

FIG. 7 illustrates an example of a method of combining modes, according to one or more embodiments.

Referring to FIG. 7, operations 710 to 760 may be performed by any of the electronic devices described above with reference to FIGS. 1 to 6 and described below with reference to FIGS. 8 to 9.

Operations of FIGS. 3 and 4, as a non-limiting example, may be referred to as first mode operations (or operating or operation in the first mode), and operations of FIGS. 5 and 6, as a non-limiting example, may be referred to as second mode operations (or operating or operation in the first mode). The description provided with reference to FIGS. 1 to 6 and 8 to 9 may be applicable to the example of FIG. 7, and thus, a duplicate description thereof is omitted for brevity and ease of description.

In operation 710, the electronic device may measure membrane potentials of a plurality of biological neurons of a natural neural network.

In operation 720, the electronic device may extract APs and PSPs of the biological neurons from the membrane potentials.

In operation 730, the electronic device may select a mode of operation.

In operation 740, as a result of the first mode being selected in operation 730, the electronic device may adjust conductance values of a non-limiting example crossbar array (e.g., of one or more memory layers of an example the electronic neural network device 140) based on the first mode. More specifically, the electronic device may identify connection structures, and determine connection strengths based on the identified connection structure, according to the first mode described above with respect to at least FIGS. 3 and 4.

In operation 750, as a result of the second mode being selected in operation 730, the electronic device may adjust the conductance value of the crossbar array based on the second mode.

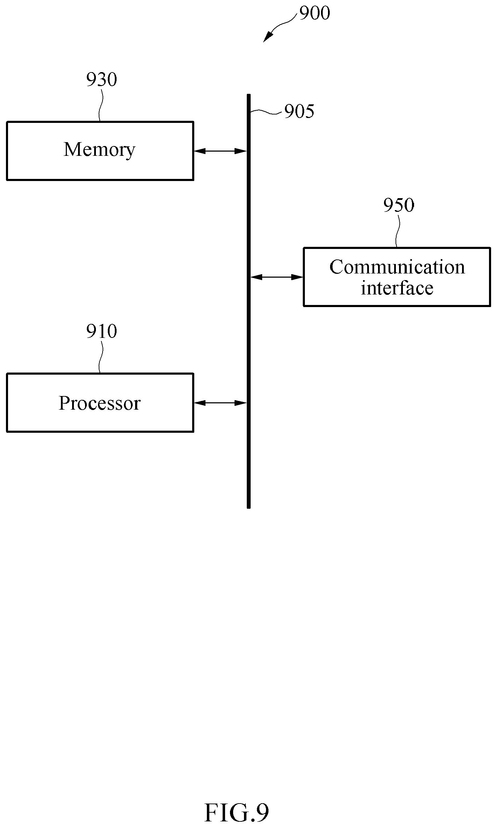

In operation 760, the electronic device may thereby provide a neural network map of the natural neural network in the form of the synaptic weights and connections in artificial neural network(s). For example, the electronic device may provide the neural network map in the example crossbar array(s) in one or more memory layers of an example electronic neural network device 140, or in another artificial neural network structure in the storage/memory of the electronic device, such as in the memory 930 of FIG. 9.

Accordingly, the crossbar array trained to mimic the corresponding natural neural network may be generated as a result of operation 750 (e.g., without having to perform typical analyses of measured extra-cellular potentials or other analyses to determine connections and/or connection strengths among biological neurons of the natural neural network). Thus, with respect to operation 760, the artificial neural network programmed/trained/learned to mimic the corresponding natural neural network may be available for review of the connections/weights of representative of the synaptic weights/strengths of the natural neural network or for use in artificially mimicking or simulating function(s) of the natural neural network (e.g., without having to perform algorithm-based machine learning training, for example, to train the artificial neural network to determine connections and/or connection strengths).

Operation 730 may further select among the first mode, the second mode, and a third mode, where the third mode includes the electronic device adjusting the conductance value of the crossbar array by combining operations of the first and second modes or combining the respective results of the operations of the first and second modes. Since both respective amplitudes of PSPs considered in the first mode and respective populations of the PSPs considered in the second mode reflect synaptic connection strength, the fidelity of the connection mapping imparted to an example electronic neural network device (e.g., electronic neural network device 140 of FIG. 1) may be improved by combining the first and second modes.

The electronic device may determine a final conductance value for the memory elements of the electronic neural network device using respective first conductance values of the memory elements resulting from operation of the first mode, and respective second conductance values of the memory elements resulting from operation of the second mode.

In an example, with respect to each memory element of the electronic neural network device, the electronic device may determine an average value of the first and second conductance values to be the final conductance value. In an example, with respect to each memory element of the electronic neural network device, the electronic device may determine a weighted sum of the first and second conductance values to be the final conductance value. However, example approaches for determining the final conductance value, with respect to each memory element of the electronic neural network device, based on the first and second conductance values are not limited to the above examples, and may include any approach that considers the first and/or second conductance values or which selectively choose which of such various approaches to implement.

For example, the electronic device may adjust the conductance values of the crossbar array by combining the first and second modes (e.g., based on such respective results of the first and second modes), in response to a predetermined condition being satisfied, such as when a reliability of the first conductance values determined based on the first mode (or the second conductance values determined based on the second mode) is/are determined to be less than a predetermined condition, the final conductance value may be determined by using more, or only, second conductance values determined based on the second mode (or the first conductance values determined based on the first mode). In an example, select operations of the first mode may be used in combination with one or more or all operations of the second mode, and/or select operations of the second mode may be used in combination with one or more or all operations of the first mode. For example, when the second mode is determining which biological neuron pairs are connected (e.g., based on the aforementioned determinations of whether a population/count of effective firings for a particular biological neuron pair is greater than or equal to the second threshold value), the electronic device may more accurately determine whether each biological neuron pair are connected by additionally implementing at least some of the first mode to obtain the results of operation 320 and/or Example 425 of FIG. 4, and using both connection results of mode 2 and the connection determination operations of mode 1. However, such conditions determinative of whether to consider one or more operations of the first mode with one or more operations of the second mode are not limited thereto.

FIG. 8 illustrates an example of a structure of an electronic neural network device, according to one or more embodiments.

Referring to FIG. 8, the electronic neural network device may include one or more memory layers 810, one or more circuit layers 820, and connectors 830. The description provided with reference to FIGS. 1 to 7 and 9 may be applicable to the example of FIG. 8, and the electronic neural network device of FIG. 8 may also correspond to the electronic neural network devices of FIGS. 1-7 and 9, and thus, a duplicate description thereof is omitted for brevity and ease of description.

The memory layers 810 may store a neural network map of a natural neural network. For example, respective memory elements of one or more of the memory layers 810 having adjusted conductances according to mode 1 and/or mode 2 approaches discussed above, for the natural neural network from which APs and PSPs were measured, may store the neural network map. Accordingly, through such approaches disclosed above with respect to any one, any combination, or all operations and methods described herein, memory layers 810 may store synaptic weights representing the synaptic strengths/weights of biological neurons of the natural neural network. For example, one or more memory layers 810 may store synaptic weights reflecting the synaptic strength/weight between an i-th biological neuron and a j-th biological neuron.

Accordingly, the memory layers 810 may be capable of storing all (e.g., in all adjusted conductance changed memory elements resulting from mode 1 and/or mode 2 approaches, as non-limiting examples, and at least dependent on which biological neurons of the natural neural network the reading unit(s) 110, such as in FIG. 1, is measuring membrane signals from, for example membrane intracellular measured potentials) synaptic weights between each of the determined pre-/post-synaptic relationship paired biological neurons. These stored synaptic weights thereby provide the neural network map of the natural neural network. As an example, in an example natural neural network that includes N (for example, 109) nerve cells (e.g., measured by the example reading unit(s)) each having K (for example, 1000) potential synaptic connections, memory layer(s) 810 may be capable of storing at least KxN/2 (for example, 1000x109/2) synaptic weights. As one non-limiting example, one or more of the memory layers 810 may include at least an architecture of a crossbar array (e.g., such crossbars described herein with respect to FIGS. 1-7 and 9, as non-limiting examples) that may efficiently store such a large volume of data.

The circuit layers 820 may include stacked circuits, and the stacked circuits may be circuits configured to perform functions such as, for example, the neural signal measurements (e.g., through connected electrodes of the example reading unit 110 of FIG. 1), signal processing, and analyses, and/or any other operations discussed herein, e.g., to work in cooperation with the one or more memory layers 810 that may store the synaptic weights. The circuits having the foregoing functions may be distributed in a number of circuit layers or integrated in one circuit layer. The circuits may be, for example, CMOS integrated circuits (ICs). However, examples are not necessarily limited thereto. To copy the connection structure of many biological neurons of a large-scale natural neural network, an electronic neural network structure of the electronic neural network device of the same or like size as the natural neural network (or at least of the many measured biological neurons) may be used. For example, the electronic neural network device may be a 3D stacked system, which may increase the degree of integration between layers.

For example, the memory layers 810 may include, for example, a memory layer 1, a memory layer 2, ... , and a memory layer L. Multiple or all of the memory layers may be vertically stacked on each other, for example.

Similarly, the circuit layers 820 may include, for example, a circuit layer 1, a circuit layer 2, ..., and a circuit layer M. Multiple or all of the circuit layers may be vertically stacked on each other, for example. Each of one or more of the circuit layers may include a circuit for performing a different function or operation than the copying/mapping of the natural neural network to generate the programmed/trained/learned artificial neural network configuration, such as in one or more of the non-limiting example crossbar arrays of one or more memory layers of the example electronic neural network device 140, and/or as offloaded from such crossbars to storage in another artificial network structure, such as the memory 930 of FIG. 9, as a non-limiting example and/or as discussed in operation 760 of FIG. 7. In an example, the circuit layer 1 may include circuit(s) for accumulation, the circuit layer 2 may include circuit(s) for firings, and the circuit layer M may include circuit(s) for voltage amplification. In one example, as noted above, such circuit layer(s) may convert a PSP firing to pulse or spike of like amplitude of the AP spike/pulse at a firing timing corresponding to the timing of the PSP.

Alternatively, some or each of the circuit layers may include circuits for performing the same functions or operations. For example, the circuit layer 1 may include a circuit for accumulation and a circuit for firing, and the circuit layer 2 may also include a circuit for accumulation and a circuit for firing, like the circuit layer 1.

The connectors 830 may connect the memory layers 810 and the circuit layers 820. The connectors 830 may be, for example, at least one of through-silicon vias (TSVs) penetrating through the memory layers 810 and the circuit layers 820 and micro bumps connecting the memory layers 810 and the circuit layers 820.

TSV is a packaging technique for drilling fine vias in chips and filling the vias with conductive materials to connect upper chips to lower chips, rather than connecting the chips using wires. Since the TSVs may secure direct electrical connection paths in the chips and thus, use less space than previous non-TSV packaging, the package size may be reduced and the length of interconnection between the chips may be reduced.

In response to a reception of a stimulus signal, the circuit layers 820 may activate neuron modules (i.e., respective circuitry) to read synaptic weights corresponding to the neuron modules from the memory layers 810 storing the synaptic weights. In this case, the connectors 830 may perform signal transmission between the memory layers 810 and the circuit layers 820 for the reading of synaptic weights from respective memory elements of the memory layers 810 to the corresponding neuron modules of the circuit layers 820.

FIG. 9 illustrates an example of an electronic device, according to one or more embodiments.

Referring to FIG. 9, an electronic device 900 may include a processor 910, a memory 930, and a communication interface 950. The processor 910, the memory 930, and the communication interface 950 may communicate with each another via a communication bus 905, for example.

The processor 910 may receive, obtain, or measure APs of a first biological neuron of a natural neural network and PSPs of a second biological neuron of the natural neural network, may adjust a conductance value of a memory element of a cross point, of a non-limiting example crossbar, corresponding to the first and second biological neurons based on a first difference between the time corresponding to the APs of the first biological neuron and the time corresponding to the PSPs of the second biological neuron, may adjust the time corresponding to the PSPs of the second biological neuron, and may adjust a first conductance value of the cross point based on a second difference between the time corresponding to the APs of the first biological neuron and the adjusted time corresponding to the PSPs of the second biological neuron of the second biological neuron (e.g., after resetting the crossbar), as a non-limiting example.

In another example, the processor 910 may obtain APs fired from a first biological neuron of a natural neural network and PSPs fired from a second biological neuron of the natural neural network during a predetermined time window, and may determine a conductance value of a cross point, of the example crossbar, corresponding to the first and second biological neurons for the cross point when a population (i.e., total number) of effective firings of the second biological neuron is equal to or greater than a second threshold value.

The memory 930 may be a volatile memory or a non-volatile memory, and the processor 910 may execute a program and control the electronic device 900. Instructions (e.g., coding) to be executed by the processor 910 may be stored in the memory 930, and when executed by the processor 910 the instructions configure the processor to perform any one, any combination, or all operations and/or methods described herein with respect to such measured biological neural signals. The electronic device 900 may be, or may be connected to, an external device (e.g., a personal computer (PC) or a network) through an input/output device (e.g., also represented by the communication interface 950) to exchange data therewith. The electronic device 900 may be, or may be mounted in, various computing devices and/or systems such as a smartphone, a tablet computer, a laptop computer, a desktop computer, a television, a wearable device, a security system, a smart home system, and the like.

The neural network mapping systems, electronic devices, mapping devices, electronic neural network devices, recording units, membrane potential recording/measuring electrodes, signal and/or analysis processors, processors, neuromorphic processors, crossbars, memory layers, memory elements, resistive random-access memory (RRAM), memory layers, circuit layers, circuitry for performing accumulations, circuitry for firing, circuitry for voltage amplification, CMOS integrated circuits (ICs), 3D stacked systems, 3D vertically stacked systems, neuron modules, electrodes, complementary metal-oxide-semiconductor (CMOS) nanoelectrode arrays (CNEA), solid-state electronic memory networks and/or circuitry, as non-limiting examples, and other apparatuses, devices, modules, elements, and components described herein with respect to FIGS. 1-9 are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions used herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

**The following is a list of further preferred embodiments of the invention:**
Embodiment 1. A method with artificial neural network generation, the method comprising:
   performing an adjusting, based on a firing time difference between an action potential (AP) of a first biological neuron and a post-synaptic potential (PSP) of a second biological neuron, of a first conductance value of a first memory corresponding to the first and second biological neurons;
   adjusting the firing time difference based on the PSP of the second biological neuron; and
   performing another adjusting, by controlling another firing time difference between the AP of the first biological neuron and the PSP of the second biological neuron to be the adjusted firing time difference, of a second conductance value of the first memory corresponding to the first and second biological neurons.
Embodiment 2. The method of embodiment 1, further comprising resetting a conductance of the first memory after the adjusting of the first conductance value and before the other adjusting of the second conductance value.
Embodiment 3. The method of embodiment 2, wherein the second conductance value is same as the first conductance value upon the resetting of the conductance of the first memory.
Embodiment 4. The method of embodiment 1, wherein the performing of the adjusting of the first conductance value includes performing the adjusting of the first conductance value when the firing time difference is less than or equal to a threshold value.
Embodiment 5. The method of embodiment 1, further comprising converting the PSP of the second biological neuron into a pulse signal,
   wherein the firing time difference between the AP of the first biological neuron and PSP of the second biological neuron is a time difference between the AP of the first biological neuron and a firing time of the pulse signal.
Embodiment 6. The method of embodiment 5, wherein the first memory is a memory corresponding to a first cross point of a crossbar memory, and
   wherein performing of the adjusting of the first conductance value and the performing of the other adjusting of the second conductance value respectively include connecting the AP of the first biological neuron to a first electrode of the crossbar memory and connecting the PSP of the second biological neuron to a second electrode of the crossbar memory, where the first electrode and the second electrode overlap at the first cross point.
Embodiment 7. The method of embodiment 6, wherein the overlapping of the first electrode and the second electrode at the first cross point includes the first electrode connecting to a first terminal of a resistive memory and the second electrode connecting to a second terminal of the resistive memory at the cross point.
Embodiment 8. The method of embodiment 1, wherein the first memory is a memory corresponding to a cross point of a crossbar memory, where first electrodes of the crossbar memory overlap second electrodes of the crossbar memory at respective cross points of the crossbar memory.
Embodiment 9. The method of embodiment 8,
   wherein the performing of the adjusting of the first conductance value of the first memory includes providing signals from first biological neurons to respective first electrodes of the crossbar memory, and providing signals from second biological neurons to respective second electrodes of the crossbar memory, and
   wherein connection relationships between pairs of the first biological neurons and the second biological neurons are indicated by first memories of cross points of the crossbar memory with adjusted first conductance values.
Embodiment 10. The method of embodiment 9, wherein plural biological neurons of the first biological neurons are also plural biological neurons of the second biological neurons.
Embodiment 11. The method of embodiment 9, wherein the performing of the other adjusting of the second conductance value includes performing the other adjusting for only second conductance values of the first memories corresponding to the cross points of the crossbar memory with the adjusted first conductance values.
Embodiment 12. The method of embodiment 8, wherein signals of first biological neurons are provided to the first electrodes and signals of second biological neurons are provided to the second electrodes, and
   wherein the performing of the adjusting of the first conductance value further comprises adjusting first conductance values of first memories, of different cross points of the crossbar memory that respectively correspond to different pairs of the first and second biological neurons, corresponding to first pairs of the first and second biological neurons that have firing time differences less than or equal to a threshold value, representing that the each of the first pairs have pre-/post- synaptic relationships.
Embodiment 13. The method of embodiment 12, wherein the performing of the other adjusting of the second conductance value includes performing the other adjusting of only the first memories corresponding to the first pairs.
Embodiment 14. The method of embodiment 1, wherein the performing of the other adjusting of the second conductance value includes selectively performing the other adjusting based on determinations of which of first memories, corresponding to different pairs of first and second biological neurons, were adjusted in the performing of the adjusting of the first conductance value selectively for each of the different pairs of the first and second biological neurons.
Embodiment 15. The method of embodiment 1, wherein the adjusting of the firing time difference comprises adjusting a firing time corresponding to the PSP of the second biological neuron based on an amplitude of the PSP of the second biological neuron.
Embodiment 16. The method of embodiment 1, further comprising obtaining the AP of the first biological neuron and the PSP of the second biological neuron in real-time.
Embodiment 17. The method of embodiment 1, further comprising:
   selectively adjusting another conductance value of the first memory based on a counted number of pairs, of PSPs of the second biological neuron and APs of the first biological neuron, having respective firing times within a first threshold, within a predetermined time window,
   wherein the adjusting of the conductance value is performed a number of times equal to the counted number, resulting in the first conductance value.
Embodiment 18. A non-transitory computer-readable storage medium storing instructions that, when executed by a processor, cause the processor to perform the method of embodiment 1.
Embodiment 19. A method with artificial neural network generation, the method comprising:
   determining a conductance value of a first memory corresponding to first and second biological neurons based on a counted number of pairs, of post-synaptic potential (PSPs) of the second biological neuron and action potentials (APs) of the first biological neuron, having respective firing times within a first threshold, within a predetermined time window.
Embodiment 20. The method of embodiment 19, further comprising counting the number of pairs, of the PSPs of the second biological neuron and the APs of the first biological neuron, that have the respective firing times within the first threshold,
   wherein the determining of the conductance value of the first memory further comprises determining the conductance value of a cross point memory, of a crossbar memory, corresponding to the first and second biological neurons in response to the first and second biological neurons being determined to have a pre-/post- synaptic relationship based on the counted number.
Embodiment 21. The method of embodiment 19, wherein the determining of the conductance value further comprises adjusting the conductance value whenever a firing time difference between an AP of the first biological neuron and a firing time of a PSP of the second biological neuron is less than or equal to the first threshold.
Embodiment 22. The method of embodiment 19, further comprising converting a PSP of the second biological neuron into a pulse signal,
   wherein the determining of the conductance value of the first memory further comprises determining the conductance value of a cross point memory of the first memory based on a timing difference between an arrival time of an AP of the first biological neuron and an arrival time of the pulse signal of the second biological neuron.
Embodiment 23. The method of embodiment 19, further comprising obtaining the APs of the first biological neuron and the PSPs of the second biological neuron in real-time.
Embodiment 24. A method with artificial neural network generation, the method comprising:
   selectively adjusting a conductance value of a first memory corresponding to first and second biological neurons based on a counted number of pairs, of post-synaptic potential (PSPs) of the second biological neuron and action potentials (APs) of the first biological neuron, having respective firing times within a first threshold, within a predetermined time window.
Embodiment 25. The method of embodiment 24, wherein the adjusting of the conductance value is performed a determined number of times.
Embodiment 26. The method of embodiment 25, wherein the selective adjusting includes selecting the adjusting of the conductance value in response to the counted number being greater than or equal to a threshold.
Embodiment 27. The method of embodiment 26, wherein the determined number of times is equal to the counted number.
Embodiment 28. The method of embodiment 25, further comprising performing another adjusting, based on a firing time difference between an AP of the first biological neuron and a PSP of the second biological neuron, of a first conductance value of the first memory,
   wherein the first conductance value is a resultant conductance value of the adjusting of the conductance value the determined number of times.
Embodiment 29. The method of embodiment 24, wherein the first memory is a memory corresponding to a cross point of a crossbar memory, where first electrodes of the crossbar memory overlap second electrodes of the crossbar memory at respective cross points of the crossbar memory.
Embodiment 30. The method of embodiment 29,
   wherein the selective adjusting includes providing signals from first biological neurons to respective first electrodes of the crossbar memory, and providing signals from second biological neurons to respective second electrodes of the crossbar memory, and
   wherein connection relationships and strengths between pairs of the first biological neurons and the second biological neurons are indicated by corresponding first memories of cross points of the crossbar memory that have adjusted conductance values resulting from the selective adjusting.
Embodiment 31. The method of embodiment 24, further comprising counting the number of pairs, of the PSPs of the second biological neuron and the APs of the first biological neurons, that have the respective firing times within the first threshold, and
   determining that the first and second biological neurons have a pre-/post- synaptic relationship in response to the counted number being greater than or equal to the second threshold value.
Embodiment 32. A non-transitory computer-readable storage medium storing instructions that, when executed by a processor, cause the processor to perform the method of embodiment 24.
Embodiment 33. An electronic device comprising:
   a crossbar memory having first electrodes, including a first electrode, that overlap second electrodes, including a second electrode, of the crossbar memory at respective cross points of the crossbar memory, with the first electrode and the second electrode overlapping to respectively connect to a first memory at a first cross point of the crossbar memory; and
   a processor configured to:
      control a provision of an action potential (AP) of a first biological neuron to the first electrode, and a provision of a post-synaptic potential (PSP) of a second biological neuron to the second electrode, to selectively adjust, based on a firing time difference between the AP of the first biological neuron and the PSP of the second biological neuron, a first conductance value of the first memory;
      adjust the firing time difference based on the PSP of a second biological neuron; and
      control another provision of the AP of the first biological neuron to the first electrode and the PSP of the second biological neuron to the second electrode, having the adjusted firing time difference between the AP of the first biological neuron and the PSP of the second biological neuron, to selectively adjust a second conductance value of the first memory.
Embodiment 34. The device of embodiment 33, wherein the processor is further configured to control a resetting of a conductance of the first memory after the first conductance value is adjusted and before the second conductance value is adjusted.
Embodiment 35. The device of embodiment 34, wherein the second conductance value is same as the first conductance value upon the resetting of the conductance of the first memory.
Embodiment 36. The device of embodiment 33, wherein the first conductance value is adjusted in response to the firing time difference being less than or equal to a threshold value.
Embodiment 37. The device of embodiment 33, wherein the processor is further configured to:
   convert the PSP of the second biological neuron into a pulse signal; and
   perform the control of the provision of the PSP of the second biological neuron to the second electrode by providing the pulse to the second electrode, and perform the control of the other provision of the PSP of the second biological neuron to the second electrode by providing the pulse to the second electrode,
   wherein the firing time difference between the AP of the first biological neuron and the PSP of the second biological neuron is a time difference between the AP of the first biological neuron and a firing time of the pulse signal, and
   wherein the adjusted firing time difference is between the AP of the first biological neuron and the pulse signal corresponding to the adjusted firing time difference.
Embodiment 38. The device of embodiment 33, wherein, for the adjustment of the firing time difference, the processor is configured to adjust a firing time corresponding to the PSP of the second biological neuron based on an amplitude of the PSP of the second biological neuron.
Embodiment 39. An electronic device comprising:
   a crossbar memory having first electrodes, including a first electrode, that overlap second electrodes, including a second electrode, of the crossbar memory at respective cross points of the crossbar memory, with the first electrode and the second electrode overlapping to respectively connect to a first memory corresponding to a first cross point of the crossbar memory; and
   a processor configured to control a provision of action potentials (APs) of a first biological neuron to the first electrode, and a provision of post-synaptic potentials (PSPs) of a second biological neuron to the second electrode, to selectively adjust a conductance value of the first memory based on a counted number of pairs, of the PSPs of the second biological neuron and the APs of the first biological neuron, having respective firing times within a first threshold, within a predetermined time window.
Embodiment 40. The device of embodiment 39, wherein the control of the provision of the APs of the first biological neuron to the first electrode and the provision of the PSPs of the second biological neuron, includes providing respective APs of the first biological neural and respective PSPs of the second biological neuron a number of times equal to the counted number of pairs to adjust the conductance value of the first memory based the counted number of pairs.
Embodiment 41. The device of embodiment 39, wherein the processor is further configured to count the number of pairs, of the PSPs of the second biological neuron and the APs of the first biological neuron, that have the respective firing times within the first threshold, and
in response to the counted number being greater than or equal to a threshold, perform the provision of the APs of the fist biological neuron and the provision of the PSPs of the second biological neuron.
Embodiment 42. The device of embodiment 39, wherein the processor is further configured to convert a PSP of the second biological neuron into a pulse signal, and
   determine the conductance value of a cross point memory of the crossbar memory based on a timing difference between an arrival time of an AP of the first biological neuron and an arrival time of the pulse signal of the second biological neuron.
Embodiment 43. The device of embodiment 39, wherein the processor is further configured to obtain the APs of the first biological neuron and the PSPs of the second biological neuron in real-time.
Embodiment 44. A method with artificial neural network generation, the method comprising:
   obtaining action potentials (APs) of a first biological neuron of a natural neural network and post-synaptic potentials (PSPs) of a second biological neuron of the natural neural network;
   determining a first conductance value of a first cross point memory corresponding to the first and second biological neurons, as a first mode;
   determining a second conductance value of a second cross point memory corresponding to the first and second biological neurons, as a second mode; and
   determining a final conductance value of a final cross point memory based on at least one of the first conductance value and the second conductance value,
   wherein the determining of the first conductance value comprises:
      adjusting, based on a firing time difference between an AP of the first biological neuron and a PSP of the second biological neuron, a conductance value of the first cross point memory;
      adjusting the firing time difference based on the PSP of the second biological neuron; and
      controlling another firing time difference between the AP of the first biological neuron and the PSP of the second biological neuron to be the adjusted firing time difference, and based on the controlled other firing time difference, adjusting another conductance value of the first cross point memory, to be the first conductance value, and
   wherein the determining of the second conductance value comprises counting a number of pairs, of the PSPs of the second biological neuron and the APs of the first biological neuron, that have respective firing times within a first threshold, and selectively adjusting a conductance value of the second cross point memory based on the counted number of pairs, to be the second conductance value.
Embodiment 45. The method of embodiment 44, wherein the first cross point memory, the second cross point memory, and final cross point memory are a same cross point memory.
Embodiment 46. An electronic device comprising:
   a crossbar memory having first electrodes, including a first electrode, that overlap second electrodes, including a second electrode, of the crossbar memory at respective cross points of the crossbar memory, with the first electrode and the second electrode overlapping to respectively connect to a first memory corresponding to a first cross point of the crossbar memory; and
   a processor configured to:
      obtain action potentials (APs) of a first biological neuron of a natural neural network and post-synaptic potentials (PSPs) of a second biological neuron of the natural neural network;
      determine a first conductance value of a first cross point memory corresponding to the first and second biological neurons, as a first mode;
      determine a second conductance value of a second cross point memory corresponding to the first and second biological neurons, as a second mode; and
      determine a final conductance value of a final cross point memory based on at least one of the first conductance value and the second conductance value.
Embodiment 47. The device of embodiment 46, wherein the processor is further configured to:
   adjust, based on a firing time difference between an AP of the first biological neuron and a PSP of the second biological neuron, a conductance value of the first cross point memory;
   adjust the firing time difference based on the PSP of the second biological neuron; and
   control another firing time difference between the AP of the first biological neuron and the PSP of the second biological neuron to be the adjusted firing time difference, and based on the controlled other firing time difference, adjust another conductance value of the first cross point memory, to be the first conductance value.
Embodiment 48. The device of embodiment 46, wherein the processor is further configured to count a number of pairs, of the PSPs of the second biological neuron and the APs of the first biological neuron, that have respective firing times within a first threshold, and selectively adjusting a conductance value of the second cross point memory based on the counted number of pairs, to be the second conductance value.

## Claims

1. A method with artificial neural network generation, the method comprising:
performing an adjusting, based on a firing time difference between an action potential, AP, of a first biological neuron and a post-synaptic potential, PSP, of a second biological neuron, of a first conductance value of a first memory corresponding to the first and second biological neurons;
adjusting the firing time difference based on the PSP of the second biological neuron; and
performing another adjusting, by controlling another firing time difference between the AP of the first biological neuron and the PSP of the second biological neuron to be the adjusted firing time difference, of a second conductance value of the first memory corresponding to the first and second biological neurons.

2. The method of claim 1, further comprising resetting a conductance of the first memory after the adjusting of the first conductance value and before the other adjusting of the second conductance value, and the second conductance value being same as the first conductance value upon the resetting of the conductance of the first memory, or
wherein the performing of the adjusting of the first conductance value includes performing the adjusting of the first conductance value when the firing time difference is less than or equal to a threshold value.

3. The method of claim 1 or 2, further comprising converting the PSP of the second biological neuron into a pulse signal,
wherein the firing time difference between the AP of the first biological neuron and PSP of the second biological neuron is a time difference between the AP of the first biological neuron and a firing time of the pulse signal,
wherein the first memory is a memory corresponding to a first cross point of a crossbar memory,
wherein performing of the adjusting of the first conductance value and the performing of the other adjusting of the second conductance value respectively include connecting the AP of the first biological neuron to a first electrode of the crossbar memory and connecting the PSP of the second biological neuron to a second electrode of the crossbar memory, where the first electrode and the second electrode overlap at the first cross point, and
wherein the overlapping of the first electrode and the second electrode at the first cross point includes the first electrode connecting to a first terminal of a resistive memory and the second electrode connecting to a second terminal of the resistive memory at the cross point.

4. The method of one of claims 1 to 3, wherein the first memory is a memory corresponding to a cross point of a crossbar memory, where first electrodes of the crossbar memory overlap second electrodes of the crossbar memory at respective cross points of the crossbar memory, and
wherein the performing of the adjusting of the first conductance value of the first memory includes providing signals from first biological neurons to respective first electrodes of the crossbar memory, and providing signals from second biological neurons to respective second electrodes of the crossbar memory, and
wherein connection relationships between pairs of the first biological neurons and the second biological neurons are indicated by first memories of cross points of the crossbar memory with adjusted first conductance values.

5. The method of claim 4, wherein plural biological neurons of the first biological neurons are also plural biological neurons of the second biological neurons, or
wherein the performing of the other adjusting of the second conductance value includes performing the other adjusting for only second conductance values of the first memories corresponding to the cross points of the crossbar memory with the adjusted first conductance values.

6. The method of claim 4, wherein signals of first biological neurons are provided to the first electrodes and signals of second biological neurons are provided to the second electrodes,
wherein the performing of the adjusting of the first conductance value further comprises adjusting first conductance values of first memories, of different cross points of the crossbar memory that respectively correspond to different pairs of the first and second biological neurons, corresponding to first pairs of the first and second biological neurons that have firing time differences less than or equal to a threshold value, representing that the each of the first pairs have pre-/post- synaptic relationships, and
wherein the performing of the other adjusting of the second conductance value includes performing the other adjusting of only the first memories corresponding to the first pairs.

7. The method of one of claims 1 to 6, wherein the performing of the other adjusting of the second conductance value includes selectively performing the other adjusting based on determinations of which of first memories, corresponding to different pairs of first and second biological neurons, were adjusted in the performing of the adjusting of the first conductance value selectively for each of the different pairs of the first and second biological neurons, or
wherein the adjusting of the firing time difference comprises adjusting a firing time corresponding to the PSP of the second biological neuron based on an amplitude of the PSP of the second biological neuron, or
further comprising obtaining the AP of the first biological neuron and the PSP of the second biological neuron in real-time, or
further comprising selectively adjusting another conductance value of the first memory based on a counted number of pairs, of PSPs of the second biological neuron and APs of the first biological neuron, having respective firing times within a first threshold, within a predetermined time window, wherein the adjusting of the conductance value is performed a number of times equal to the counted number, resulting in the first conductance value.

8. The method of claim 1 further comprising:
obtaining action potentials, Aps, of the first biological neuron of a natural neural network and post-synaptic potentials, PSPs, of the second biological neuron of the natural neural network;
determining the first conductance value of a first cross point memory corresponding to the first and second biological neurons, as a first mode;
determining the second conductance value of a second cross point memory corresponding to the first and second biological neurons, as a second mode; and
determining a final conductance value of a final cross point memory based on at least one of the first conductance value and the second conductance value,
wherein the determining of the first conductance value comprises:
adjusting, based on the firing time difference between the AP of the first biological neuron and the PSP of the second biological neuron, a conductance value of the first cross point memory;
adjusting the firing time difference based on the PSP of the second biological neuron; and
controlling another firing time difference between the AP of the first biological neuron and the PSP of the second biological neuron to be the adjusted firing time difference, and based on the controlled other firing time difference, adjusting another conductance value of the first cross point memory, to be the first conductance value,
wherein the determining of the second conductance value comprises counting a number of pairs, of the PSPs of the second biological neuron and the APs of the first biological neuron, that have respective firing times within a first threshold, and selectively adjusting a conductance value of the second cross point memory based on the counted number of pairs, to be the second conductance value, and
wherein the first cross point memory, the second cross point memory, and final cross point memory are a same cross point memory.

9. A non-transitory computer-readable storage medium storing instructions that, when executed by a processor, cause the processor to perform a method with artificial neural network generation, the method comprising: determining a conductance value of a first memory corresponding to first and second biological neurons based on a counted number of pairs, of post-synaptic potential, PSPs, of the second biological neuron and action potentials, Aps, of the first biological neuron, having respective firing times within a first threshold, within a predetermined time window.

10. The computer-readable storage medium of claim 9, further comprising counting the number of pairs, of the PSPs of the second biological neuron and the APs of the first biological neuron, that have the respective firing times within the first threshold, the determining of the conductance value of the first memory further comprising determining the conductance value of a cross point memory, of a crossbar memory, corresponding to the first and second biological neurons in response to the first and second biological neurons being determined to have a pre-/post- synaptic relationship based on the counted number, or
wherein the determining of the conductance value further comprises adjusting the conductance value whenever a firing time difference between an AP of the first biological neuron and a firing time of a PSP of the second biological neuron is less than or equal to the first threshold, or
further comprising converting a PSP of the second biological neuron into a pulse signal, wherein the determining of the conductance value of the first memory further comprises determining the conductance value of a cross point memory of the first memory based on a timing difference between an arrival time of an AP of the first biological neuron and an arrival time of the pulse signal of the second biological neuron, or
further comprising obtaining the APs of the first biological neuron and the PSPs of the second biological neuron in real-time.

11. The computer-readable storage medium of claim 9 or 10, wherein the determining of the conductance value of the first memory comprises selectively adjusting the conductance value of the first memory corresponding to said first and second biological neurons based on the counted number of pairs, of the PSPs of the second biological neuron and the Aps of the first biological neuron, having respective firing times within the first threshold, within the predetermined time window.

12. The computer-readable storage medium of claim 11, wherein the adjusting of the conductance value is performed a determined number of times, the selective adjusting including selecting the adjusting of the conductance value in response to the counted number being greater than or equal to a threshold, the determined number of times being equal to the counted number, or
wherein the adjusting of the conductance value is performed a determined number of times, and further comprising performing another adjusting, based on a firing time difference between an AP of the first biological neuron and a PSP of the second biological neuron, of a first conductance value of the first memory, the first conductance value being a resultant conductance value of the adjusting of the conductance value the determined number of times.

13. The computer-readable storage medium of claim 11, wherein the first memory is a memory corresponding to a cross point of a crossbar memory, where first electrodes of the crossbar memory overlap second electrodes of the crossbar memory at respective cross points of the crossbar memory, the selective adjusting including providing signals from first biological neurons to respective first electrodes of the crossbar memory, and providing signals from second biological neurons to respective second electrodes of the crossbar memory, and connection relationships and strengths between pairs of the first biological neurons and the second biological neurons are indicated by corresponding first memories of cross points of the crossbar memory that have adjusted conductance values resulting from the selective adjusting, or
further comprising counting the number of pairs, of the PSPs of the second biological neuron and the APs of the first biological neurons, that have the respective firing times within the first threshold, and determining that the first and second biological neurons have a pre-/post-synaptic relationship in response to the counted number being greater than or equal to the second threshold value.

14. An electronic device comprising:
a crossbar memory having first electrodes, including a first electrode, that overlap second electrodes, including a second electrode, of the crossbar memory at respective cross points of the crossbar memory, with the first electrode and the second electrode overlapping to respectively connect to a first memory corresponding to a first cross point of the crossbar memory; and
a processor configured to:
obtain action potentials, Aps, of a first biological neuron of a natural neural network and post-synaptic potentials, PSPs, of a second biological neuron of the natural neural network;
determine a first conductance value of a first cross point memory corresponding to the first and second biological neurons, as a first mode;
determine a second conductance value of a second cross point memory corresponding to the first and second biological neurons, as a second mode; and
determine a final conductance value of a final cross point memory based on at least one of the first conductance value and the second conductance value.

15. The device of claim 14, wherein the processor is further configured to adjust, based on a firing time difference between an AP of the first biological neuron and a PSP of the second biological neuron, a conductance value of the first cross point memory, adjust the firing time difference based on the PSP of the second biological neuron, and control another firing time difference between the AP of the first biological neuron and the PSP of the second biological neuron to be the adjusted firing time difference, and based on the controlled other firing time difference, adjust another conductance value of the first cross point memory, to be the first conductance value, or
wherein the processor is further configured to count a number of pairs, of the PSPs of the second biological neuron and the APs of the first biological neuron, that have respective firing times within a first threshold, and selectively adjusting a conductance value of the second cross point memory based on the counted number of pairs, to be the second conductance value.
